# EUROPEAN PATENT APPLICATION

(11) **EP 4 329 403 A1**
(43) Date of publication of application: **28.02.2024**
(21) Application number: 22790922.3
(22) Date of filing: 13.04.2022
(51) Int. Cl.: H04W 72/04, H04W 76/28

(54) **TRANSMISSION CONTROL METHOD, TERMINAL AND NETWORK SIDE DEVICE**

(30) Priority: 19.04.2021 CN 202110421166
(71) Applicant: Vivo Mobile Communication Co., Ltd., Dongguan, Guangdong 523863 (CN)
(72) Inventor: LIU, Siqi, Dongguan, Guangdong 523863 (CN); LIANG, Jing, Dongguan, Guangdong 523863 (CN); JI, Zichao, Dongguan, Guangdong 523863 (CN); LIU, Shixiao, Dongguan, Guangdong 523863 (CN)
(74) Representative: Murgitroyd & Company
(86) International application number: PCT/CN2022/086534
(87) International publication number: WO 2022/222814

(57) **Abstract**

This application discloses a transmission control method, a terminal, and a network side device, and pertains to the field of wireless communication technologies, and the transmission control method in embodiments of this application includes: performing, by a terminal based on a first status or based on the first status and a second status, a first operation related to discontinuous reception DRX; where the first status includes: a status of a reporting resource; and the second status includes at least one of following: a status of a sidelink feedback resource and a feedback enablement status.

## Description

### CROSS-REFERENCE TO RELATED APPLICATION

The present invention claims priority to Chinese Patent Application No. 202110421166.0, filed with the China National Intellectual Property Administration on April 19, 2021 and entitled "TRANSMISSION CONTROL METHOD, TERMINAL, AND NETWORK SIDE DEVICE", which is incorporated herein by reference in its entirety.

### TECHNICAL FIELD

This application pertains to the field of wireless communications technologies, and specifically relates to a transmission control method, a terminal and a network side device.

### BACKGROUND

Sidelink (sidelink, SL, or may also be referred to as side-link, sidelink, side link, or the like) terminals within coverage of a base station need to monitor downlink control information (Downlink Control Information, DCI) sent by the base station, such as SL DCI for scheduling sidelink resources and/or Uu DCI for Uu interface services. However, continuous monitoring for DCI all the time consumes a large amount of energy. Therefore, monitoring or transmission behaviors of terminals (User Equipment, UE) need to be controlled through a discontinuous reception (Discontinuous Reception, DRX) mechanism to achieve power saving. However, requirements of SL services are usually different from requirements of Uu services, and the terminal may also need to receive an SL feedback after SL DCI schedules the terminal to perform SL transmission. Further, the terminal may also need to report the obtained SL feedback information to the base station, and therefore the sidelink terminal also needs to consider the procedure of SL feedback in comparison to the procedure of Uu DCI-based scheduling and feedback information reporting. How sidelink terminals implement a similar DRX mechanism and monitor for DCI is a technical problem that needs to be resolved at present.

### SUMMARY

Embodiments of this application provide a transmission control method, a terminal, and a network side device to implement a DRX mechanism in sidelink.

According to a first aspect, a transmission control method is provided, including: performing, by a terminal based on a first status or based on the first status and a second status, a first operation related to discontinuous reception DRX; where the first status includes: a status of a reporting resource; and the second status includes at least one of following: a status of a sidelink feedback resource and a feedback enablement status.

According to a second aspect, a transmission control apparatus is provided, including: a first determining module, configured to determine a first status, or the first status and a second status; and a first execution module, configured to, based on the first status or based on the first status and the second status, perform a first operation related to discontinuous reception DRX; where the first status includes: a status of a reporting resource; and the second status includes at least one of following: a status of a sidelink feedback resource and a feedback enablement status.

According to a third aspect, a transmission control method is provided, including: performing, by a network side device based on a third status or based on the third status and a fourth status, a second operation related to discontinuous reception DRX; where the third status includes: a status of a reporting resource; and the fourth status includes at least one of following: a status of a sidelink feedback resource and a feedback enablement status.

According to a fourth aspect, a transmission control apparatus is provided, including: a second determining module, configured to determine a third status, or the third status and a fourth status; and a second execution module, configured to, based on the third status or based on the third status and the fourth status, perform a second operation related to discontinuous reception DRX; where the third status includes: a status of a reporting resource; and the fourth status includes at least one of following: a status of a sidelink feedback resource and a feedback enablement status.

According to a fifth aspect, a terminal is provided, where the terminal includes a processor, a memory, and a program or instructions stored in the memory and executable on the processor, and when the program or the instructions are executed by the processor, the steps of the method according to the first aspect are implemented.

According to a sixth aspect, a terminal is provided, including a processor and a communication interface, where the processor is configured to perform, based on a first status or based on the first status and a second status, a first operation related to discontinuous reception DRX; where the first status includes: a status of a reporting resource; and the second status includes at least one of the following: a status of a sidelink feedback resource and a feedback enablement status; and the communication interface is configured to communicate with an external communication device.

According to a seventh aspect, a network side device is provided, where the network side device includes a processor, a memory, and a program or instructions stored in the memory and executable on the processor, and when the program or the instructions are executed by the processor, the steps of the method according to the third aspect are implemented.

According to an eighth aspect, a network side device is provided, including a processor and a communication interface, where the processor is configured to perform, based on a third status or based on the third status and a fourth status, a second operation related to discontinuous reception DRX; where the third status includes: a status of a reporting resource; and the fourth status includes at least one of the following: a status of a sidelink feedback resource and a feedback enablement status; and the communication interface is configured to communicate with an external communication device.

According to a ninth aspect, a readable storage medium is provided, where a program or instructions are stored in the readable storage medium, and when the program or the instructions are executed by a processor, the steps of the method according to the first aspect are implemented, or the steps of the method according to the third aspect are implemented.

According to a tenth aspect, a chip is provided, where the chip includes a processor and a communication interface, the communication interface is coupled to the processor, and the processor is configured to run a program or instructions to implement the steps of the method according to the first aspect or implement the steps of the method according to the third aspect.

According to an eleventh aspect, a computer program/program product is provided, where the computer program/program product is stored in a non-transitory storage medium, and the program/program product is executed by at least one processor to implement the steps of the method according to the first aspect or the steps of the method according to the third aspect.

In the embodiments of this application, the terminal performs the first operation based on the first status or based on the first status and the second status, where the first status includes: a status of a reporting resource; and the second status includes at least one of the following: a status of a sidelink feedback resource and a feedback enablement status. In this way, a DRX-related operation can be determined based on the status of the reporting resource, the status of the sidelink feedback resource, and the feedback enablement status, thereby implementing a similar DRX mechanism in sidelink.

### BRIEF DESCRIPTION OF DRAWINGS

FIG. 1 is a schematic diagram of a wireless communication system to which the embodiments of this application are applicable;
FIG. 2 is a flowchart of a transmission control method according to an embodiment of this application;
FIG. 3 is a flowchart of another transmission control method according to an embodiment of this application;
FIG. 4 is a schematic structural diagram of a transmission control apparatus according to an embodiment of this application;
FIG. 5 is a schematic structural diagram of another transmission control apparatus according to an embodiment of this application;
FIG. 6 is a schematic structural diagram of a communication device according to an embodiment of this application;
FIG. 7 is a schematic diagram of a hardware structure of a terminal according to an embodiment of this application; and
FIG. 8 is a schematic diagram of a hardware structure of a network side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, a first object may be one or multiple. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

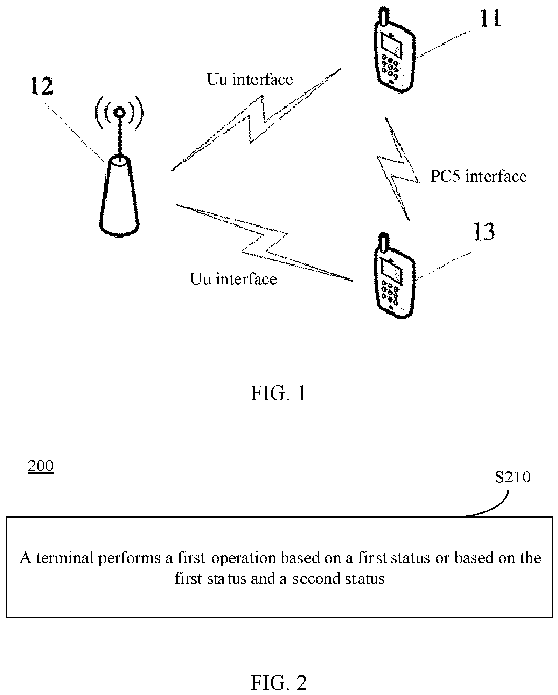

FIG. 1 is a schematic diagram of a wireless communication system to which the embodiments of this application are applicable. The wireless communication system includes a relay terminal (relay UE) 11, a network side device 12, and a remote terminal (remote UE) 13. In the embodiments of this application, communication between the remote terminal 13 and the relay terminal 11 is performed via a PCS (sidelink) interface, communication between the relay terminal 11 and the network side device 12 is performed via a Uu interface, and communication between the remote terminal 13 and the network side device 12 may also be performed via a Uu interface.

The relay terminal 11 may also be referred to as a relay (relay) terminal device or relay user terminal (User Equipment, UE), and the remote terminal 13 may be a remote terminal device or remote (remote) UE. The relay terminal 11 and the remote terminal 13 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device) or vehicle user equipment (VUE), or pedestrian user equipment (PUE). The wearable device includes: a wrist band, earphones, glasses, or the like. It should be noted that specific types of the relay terminal 11 and the remote terminal 13 are not limited in the embodiments of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmitting receiving point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

The long term evolution (Long Term Evolution, LTE) system supports sidelink (sidelink, SL, or may also be referred to as sidelink, sidelink, sidelink, or the like) from the 12th release, and terminals (User Equipment, UE) directly perform data transmission over sidelink without passing through network devices.

In a new radio (New Radio, NR) sidelink system, the UE sends sidelink control information (Sidelink Control Information, SCI) through a physical sidelink feedback channel (Physical SideLink Feedback Channel, PSFCH) to schedule physical sidelink shared channel (Physical Sidelink Shared Channel, PSSCH) transmission for sending data; and may feed back a sidelink hybrid automatic repeat request acknowledgement (Hybrid automatic repeat request acknowledgement, HARQ-ACK) on the physical sidelink feedback channel (Physical Sidelink Feedback Channel, PSFCH).

The NR sidelink supports two resource allocation modes: scheduled resource allocation (Scheduled resource allocation) mode (usually referred to as mode-1) and autonomous resource selection (autonomous resource selection) mode (usually referred to as mode-2). In the former mode, the network side device controls and allocates resources for each UE, and in the latter mode, resources are autonomously selected by UEs.

In mode-1, the base station may schedule SL resources for the terminal by sending SL downlink control information (Downlink Control Information, DCI), or configure SL resources for the terminal by configuring a configured grant (Configured Grant, CG). In addition, a physical uplink control channel (Physical Uplink Control Channel, PUCCH) resource may be also configured or indicated for the terminal, and the terminal reports obtained sidelink HARQ-ACK information to the base station on the PUCCH, so as to help the base station make subsequent scheduling decision. Using an SL resource being scheduled by SL DCI as an example, the SL DCI schedules the SL resource located in slot n for the terminal, and after using this resource for SL transmission, the terminal receives a HARQ-ACK feedback on a corresponding PSFCH resource and reports the HARQ-ACK feedback to the base station on a subsequent PUCCH resource. The base station determines, based on content of the report, whether retransmission needs to be scheduled.

To reduce power consumption of the SL UE, the DRX mechanism may be introduced to SL. The existing DRX mechanism for Uu PDCCH is referred to as a Uu DRX mechanism. DRX at the Uu interface for SL UE is referred to as bs-scheduled Uu DRX, DRX used for sidelink may be referred to as SL DRX, and DCI for scheduling sidelink resources by the base station may be referred to as SL DCI. SL DCI may be DCI that is scheduled using SL related RNTI, or DCI format 3-0 or 3-1. Uu DCI is DCI for scheduling Uu transmission or Uu RS, or DCI that indicates a resource format or transmit power or resource preemption status of Uu, for example, DCI format (format) 0-x, DCI format 1-x, or DCI format 2-x, where x is a natural number.

DRX described in the embodiments of this application may be at least one of Uu DRX, bs-scheduled Uu DRX, and SL DRX.

The following describes in detail a transmission control method provided in the embodiments of this application by using some embodiments and application scenarios thereof with reference to the accompanying drawings.

FIG. 2 is a schematic flowchart of a transmission control method according to an embodiment of this application. The method 200 may be executed by a terminal. In other words, the method may be performed by software or hardware installed on the terminal. As shown in FIG. 2, the method may include the following steps.

S210: A terminal performs a first operation based on a first status or based on the first status and a second status.

The first operation is an operation related to discontinuous reception (DRX).

The first status includes: a status of a reporting resource; and the second status includes at least one of the following: a status of a sidelink feedback resource and a feedback enablement status.

In this embodiment of this application, the reporting resource is a physical uplink control channel (Physical Uplink Control Channel, PUCCH) and/or physical uplink shared channel (Physical Uplink Shared Channel, PUSCH) resource for sending SL-related HARQ-ACK and/or CSI to a control node.

In this embodiment of this application, the sidelink feedback resource is a feedback resource on SL, for example, including but not limited to a PSFCH.

In this embodiment of this application, the first operation may include but is not limited to operations such as starting or not starting a DRX-related timer, and/or whether to monitor for the target control information, and/or whether to enter an inactive time, and/or whether to enter an active time. For example, in a possible implementation, the first operation may include at least one of the following:
starting a first timer;
entering the inactive time;
determining that an obtained DRX configuration does not include a first timer;
not entering the inactive time;
starting a second timer;
entering the active time;
stopping the inactive time;
not starting the first timer;
disabling the first timer;
stopping the first timer; and
not monitoring target control information.

The first timer may be a timer with a running period being an inactive time, and the first timer may include a HARQ round trip time (RTT) timer. That is, the terminal does not need to monitor control signaling and/or data during running of the first timer, and/or the first timer is a HARQ RTT timer.

The second timer is a timer with a running (running) period being an active time, that is, the terminal monitors control signaling and/or data during running of the second timer. The second timer is a retransmission timer. For example, the second timer may include at least one of the following: an inactivity timer (inactivity timer, where the terminal enters an inactive time after this timer expires), a retransmission timer (retransmission timer), and an on duration timer (on duration timer).

In this embodiment of this application, the terminal may be a terminal for which the control node schedules an SL resource, for example, mode-1 UE. Alternatively, the terminal may be an SL terminal within serving coverage of the control node, for example, at least one of mode-2 UE in idle state (idle), mode-2 UE in connected state, mode-1 UE, and the like within the coverage.

The control node may be a network side device, for example, an eNB, a gNB, a roadside unit, a terminal with a scheduling or control capability, or a header (header) terminal.

In the transmission control method provided in this embodiment of this application, the terminal performs the first operation based on the first status or based on the first status and the second status, where the first status includes: a status of a reporting resource; and the second status includes at least one of the following: a status of a sidelink feedback resource and a feedback enablement status. In this way, a DRX-related operation can be determined based on the status of the reporting resource, and the status of the sidelink feedback resource and/or the feedback enablement status, thereby implementing a DRX mechanism in sidelink.

In a possible implementation, the first status includes at least one of the following (I) to (IV):
(I) No reporting resource is obtained. For example, the base station does not provide a PUCCH configuration (PUCCH Config) for the terminal, or no configuration information for PUCCH is included in the SL CG configuration.
(II) The reporting resource meets a first condition. For example, the reporting resource obtained by the terminal meets the first condition. In a case that the first condition is met, it can be determined that the reporting resource is unusable.

Optionally, the reporting resource meeting the first condition includes but is not limited to at least one of the following (1) to (20).
(1) No reporting resource has been scheduled. For example, no PUCCH is scheduled by SL DCI.
(2) SL DCI indicates absence of the reporting resource. For example, absence of the PUCCH is indicated in SL DCI.
(3) The reporting resource is not indicated in SL DCI. For example, the PUCCH is not indicated in SL DCI.
(4) The reporting resource is not included in SL CG configuration. For example, configuration information for PUCCH is not included in the SL CG configuration.
(5) SL CG configuration indicates absence of the reporting resource. For example, SL CG configuration indicates absence of configuration information for PUCCH.
(6) At least part of resources indicated by SL CG or SL DCI is not used. Based on the at least part of resources indicated by SL CG or SL DCI, it can be determined that corresponding reporting resources are also unusable. For example, all of the resources indicated by the SL CG or SL DCI are not used.
(7) Transmission of at least part of resources indicated by SL CG or SL DCI is dropped. For example, transmission of at least part of the resources indicated by SL CG or SL DCI is dropped due to a conflict with other transmissions.
(8) Transmission of at least part of resources indicated by SL CG or SL DCI is cancelled. For example, transmission of at least part of the resources indicated by SL CG or SL DCI is cancelled due to a conflict with other transmissions.
(9) A priority of at least part of resources indicated by SL CG or SL DCI is a first priority, where the first priority is a given or specific priority.
(10) A priority of at least part of resources indicated by SL CG or SL DCI is decreased (deprioritized). For example, when a larger priority value corresponds to a lower priority, a method for decreasing the priority is to increase its priority value.
(11) A priority of at least part of resources indicated by SL CG or SL DCI is a second value. For example, at least part of the resources indicated by the SL CG or SL DCI cannot be used because the priority of at least part of the resources indicated by the SL CG or SL DCI is lower than the second value, not meeting a prioritized transmission condition.
(12) At least part of resources indicated by SL CG or SL DCI has no corresponding priority. For example, at least part of the resources indicated by the SL CG or the SL DCI has no corresponding Uu priority, or at least part of the resources indicated by the SL CG or the SL DCI has no corresponding sidelink priority; therefore, the corresponding reporting resources cannot be used for reporting.
(13) At least part of resources indicated by SL CG or SL DCI is invalid.

In the foregoing statuses (6) to (13), unusability of the reporting resource may be indirectly resulted.
(14) Transmission of the reporting resource is canceled. For example, transmission of the reporting resource is canceled due to a conflict with other transmissions.
(15) Transmission of the reporting resource is dropped. For example, transmission of the reporting resource conflicts with other resources and the reporting resource is dropped.
(16) A priority of the reporting resource is a second priority, where the second priority is a given or specific priority.
(17) A priority of the reporting resource has been decreased (deprioritized). For example, if the reporting resource conflicts with other resources, the priority of the reporting resource is decreased, resulting in the reporting resource being unusable for a period of time. For example, when a larger priority value corresponds to a lower priority, a method for decreasing the priority is to increase its priority value.
(18) A priority of the reporting resource is lower than a first value. For example, the reporting resource is unusable because the priority of the reporting resource is lower than the first value, not meeting a prioritized transmission condition.
(19) The reporting resource has no corresponding priority. For example, the reporting resource does not have a corresponding Uu priority, or the reporting resource has no corresponding sidelink priority, so that the reporting resource cannot be used for reporting SL HARQ ACK.
(20) The reporting resource is invalid. For example, the PUCCH is invalid and therefore cannot be used for transmission.
   (III) The reporting resource having been configured. For example, the base station provides PUCCH Config, or the SL CG configuration includes information about the PUCCH and the PUCCH has been indicated or scheduled or expected to be transmitted normally. In this possible implementation, the sidelink feedback resource or a configuration of the sidelink feedback resource can be obtained by default in this status.
   (IV) The reporting resource having been scheduled. For example, the PUCCH has been scheduled by SL DCI. In this possible implementation, the sidelink feedback resource or a configuration of the sidelink feedback resource can be obtained by default in this status.

In a possible implementation, a reporting resource being configured or a reporting resource being scheduled may include at least one of the following (1) to (7):
(1) The reporting resource is obtained. For example, the terminal has obtained a PUCCH resource.
(2) A configuration for the reporting resource is obtained. For example, the terminal has obtained a configuration of the PUCCH resource, for example, the terminal has obtained a PUCCH configuration or an SL CG configuration that includes information about the PUCCH.
(3) The reporting resource being scheduled. For example, the PUCCH has been scheduled by SL DCI.
(4) The reporting resource having been indicated by SL DCI. For example, the PUCCH has been indicated by SL DCI.
(5) Presence of the reporting resource having been indicated by SL DCI. For example, presence of the PUCCH has been indicated by SL DCI.
(6) The reporting resource being included in SL CG configuration. For example, the PUCCH is included in the SL CG configuration.
(7) Presence of the reporting resource having been indicated by SL CG configuration. For example, presence of the PUCCH is indicated in the SL CG configuration.

In a possible implementation, the status of the sidelink feedback resource includes at least one of the following (I) to (V):
(I) the sidelink feedback resource is obtained, where for example, a PSFCH is obtained;
(II) a configuration of the sidelink feedback resource is obtained, where for example, a configuration for PSFCH is obtained;
(III) no sidelink feedback resource is obtained, where for example, no PSFCH is obtained;
(IV) no configuration of the sidelink feedback resource is obtained, where for example, no configuration for PSFCH is obtained; and
(V) the sidelink feedback resource meets a second condition, where for example, a sidelink feedback resource obtained by the terminal meets the second condition. The sidelink feedback resource meeting the second condition indicates that the sidelink feedback resource is unusable. Optionally, the sidelink feedback resource meeting the second condition includes at least one of the following (1) to (7):
   (1) transmission of the sidelink feedback resource is dropped;
   (2) transmission of the sidelink feedback resource is cancelled;
   (3) a priority of the sidelink feedback resource is a third priority, where the third priority is a given or specific priority;
   (4) a priority of the sidelink feedback resource is decreased;
   (5) a priority of the sidelink feedback resource is a third value;
   (6) the sidelink feedback resource has no corresponding priority; and
   (7) the sidelink feedback resource is invalid.

In a possible implementation, the feedback enablement status includes at least one of the following (I) and (II):
(I) feedback being enabled, where for example, SL HARQ-ACK is enabled, or no logical channel (or logical channel group) with feedback being disabled is configured, or feedback is enabled for all configured logical channels (or logical channel group), or at least one logical channel (or logical channel group) with feedback being enabled is configured; and
(II) feedback being disabled, where for example, SL HARQ-ACK is disabled, or no logical channel (or logical channel group) with feedback being enabled is configured, or feedback is disabled for all configured logical channels (or logical channel group).

In a possible implementation, that the terminal performs the first operation based on the first status and the second status may include:
performing, by the terminal, the first operation in a case that the first status is a first sub-status and the second status is a second sub-status; where
the first sub-status includes one of the following that:
   no reporting resource is obtained; and
   the reporting resource being unusable.

The second sub-status includes at least one of the following that:
a sidelink feedback resource is obtained or a configuration of sidelink feedback resource is obtained; and
feedback is enabled or feedback is disabled.

The first operation includes at least one of the following (1) to (6):
(1) Starting a first timer and/or entering an inactive time.

In this embodiment of this application, the first timer may be a timer with a running period being an inactive time, and the first timer may include a HARQ round trip time (RTT) timer. That is, the terminal does not need to monitor control signaling and/or data during running of the first timer, and/or the first timer is a HARQ RTT timer.

In this possible implementation, in a case that the sidelink feedback resource is obtained or a configuration of the sidelink feedback resource is obtained, and/or feedback is enabled or feedback is disabled, but no reporting resource is obtained or the reporting resource cannot be used, retransmission scheduling is required by default (which, for example, may be specified by the protocol or preconfigured) and therefore the terminal starts the first timer and/or enters the inactive time to reduce power consumption.

(2) Not starting the first timer, and/or not entering the inactive time, and/or starting the second timer, and/or entering an active time.

The second timer is a timer with a running (running) period being an active time, that is, the terminal monitors control signaling and/or data during running of the second timer. The second timer is a retransmission timer. For example, the second timer may include at least one of the following: an inactivity timer (inactivity timer, where the terminal enters an inactive time after this timer expires), a retransmission timer (retransmission timer), and an on duration timer (on duration timer).

In this possible implementation, in a case that the sidelink feedback resource is obtained or a configuration of the sidelink feedback resource is obtained, and/or feedback is enabled or feedback is disabled, but no reporting resource is obtained or the reporting resource cannot be used, retransmission scheduling based on HARQ-ACK feedback cannot be implemented, and therefore there is no need to use or start the RTT timer and the first timer may not be started. Further, the terminal may alternatively start the second timer and/or does not enter the inactive time and/or enters the active time and/or stops the inactive time, so as to monitor control signaling and/or data.

(3) Determining that an obtained discontinuous reception DRX configuration does not include a first timer, and/or not entering the inactive time, and/or starting the second timer, and/or entering the active time, and/or stopping the inactive time.

In this possible implementation, in a case that the sidelink feedback resource is obtained or a configuration of the sidelink feedback resource is obtained, and/or feedback is enabled or feedback is disabled, but no reporting resource is obtained or the reporting resource cannot be used, retransmission scheduling based on HARQ-ACK feedback cannot be implemented, and therefore there is no need to use or start the RTT timer and it can be determined that the obtained discontinuous reception DRX configuration does not include the first timer. Further, the terminal may alternatively start the second timer and/or does not enter the inactive time and/or enters the active time and/or stops the inactive time, so as to monitor control signaling and/or data.

(4) Disabling the first timer, and/or not entering the inactive time, and/or starting the second timer, and/or entering the active time, and/or stopping the inactive time.

In this possible implementation, in a case that the sidelink feedback resource is obtained or a configuration of the sidelink feedback resource is obtained, and/or feedback is enabled or feedback is disabled, but no reporting resource is obtained or the reporting resource cannot be used, retransmission scheduling based on HARQ-ACK feedback cannot be implemented, and therefore there is no need to use or start the RTT timer and the first timer may be disabled. Further, the terminal may alternatively start the second timer and/or does not enter the inactive time and/or enters the active time and/or stops the inactive time, so as to monitor control signaling and/or data.

(5) Closing the first timer, and/or not entering the inactive time, and/or starting the second timer, and/or entering the active time, and/or stopping the inactive time.

In this possible implementation, in a case that the sidelink feedback resource is obtained or a configuration of the sidelink feedback resource is obtained, and/or feedback is enabled or feedback is disabled, but no reporting resource is obtained or the reporting resource cannot be used, retransmission scheduling based on HARQ-ACK feedback cannot be implemented, and therefore there is no need to use or start the RTT timer and the first timer may be closed. Further, the terminal may alternatively start the second timer and/or does not enter the inactive time and/or enters the active time and/or stops the inactive time, so as to monitor control signaling and/or data.

(6) Not monitoring target control information.

For example, if no PUCCH is configured or a PUCCH is configured but cannot be used, and if a PSFCH is configured, the RTT timer is started or the RTT timer is not started or SL DCI is not monitored or Uu DCI is not monitored.

Optionally, the terminal may not monitor for the target control information for a period of time after start of a specific time point.

In a possible implementation, the target control information includes but is not limited to target DCI and/or target SCI. Optionally, the target DCI includes at least one of the following: SL DCI and Uu DCI.

In this possible implementation, in a case that the sidelink feedback resource is obtained or a configuration of the sidelink feedback resource is obtained, and/or feedback is enabled or feedback is disabled, but no reporting resource is obtained or the reporting resource cannot be used, the network side device may not perform retransmission scheduling by default (which, for example, may be specified by the protocol or preconfigured) in a period of time and therefore the terminal may not monitor for the target control information to reduce power consumption of the terminal.

Optionally, at least one of the first timer and the second timer may be a timer configured for Uu DRX or a timer configured for SL DRX.

In the foregoing possible implementation, the terminal may perform the first operation at a first time, that is, the terminal performs the first operation when the first time arrives.

Optionally, the first time may be a time corresponding to Uu DRX configuration or SL DRX configuration.

In a possible implementation, the first time may include at least one of the following:
(1) a first target time;
(2) a sum of the first target time and a first offset; and
(3) a difference between the first target time and a second offset.

In the foregoing possible implementation, the first offset and the second offset may be one symbol (symbol) or one slot (slot). For example, the first time is a next symbol or next slot of the first target time. For example, if the first target time is a time at which the NACK is received or a time of the sidelink feedback resource, one implementation is that the first time is a next symbol or a next slot of the time at which the NACK is received or the time of the sidelink feedback resource.

In a possible implementation, the first target time may include at least one of the following (1) to (7):
(1) A time of preset sidelink (SL) downlink control information (DCI), for example, a time of SL DCI obtained by the terminal.
(2) A time of a preset transmission;
   for example, a time at which the N-th transmission (N is a natural number, for example, the first or the last transmission) in a sidelink grant obtained by the terminal (where the sidelink grant may include at least one of a configured sidelink grant (configured sidelink grant), a grant (grant) provided in the SL DCI, or a grant selected by the terminal) is located. Optionally, the transmission may be a PSCCH or first-stage (first stage) SCI, for example, SCI format 1-A. Alternatively, the transmission may be second-stage (2nd stage) SCI, for example, SCI format 2-A or SCI format 2-B. Alternatively, the transmission may be PSSCH.
(3) A time of the preset sidelink feedback resource;
   for example, a time at which a sidelink feedback resource corresponding to the M-th transmission (M is a natural number, for example, the first or the last transmission) in an obtained sidelink grant is located, for example, a time at which a PSFCH corresponding to a specific transmission is located.
(4) A start time or end time of a period of preset sidelink grant;
   for example, a start time or end time of a period of a sidelink grant obtained by the terminal (where the sidelink grant may include at least one of a configured sidelink grant (configured sidelink grant), a grant (grant) provided in the SL DCI, or a grant selected by the terminal).
(5) A time at which negative-acknowledgement information is sent or received; that is, a time point at which the terminal sends a NACK or receives a NACK.
(6) A time at which a transmission failure is determined; for example, a time point at which the terminal determines a transmission failure.
(7) A time corresponding to a preset reporting resource, for example, a time corresponding to a reporting resource obtained by the terminal. This applies to a case that the first status includes the reporting resource being unusable.

An example is a time corresponding to a reporting resource indicated in the SL DCI or a reporting resource included in the SL CG configuration.

It should be noted that if the first target time includes a plurality of the above items, it is indicated that the terminal performs the first operation at the corresponding plurality of first times.

For example, the RTT timer is started at a time point A (that is, the first time), where the time point A may be a time point at which at least one of SL DCI, PSCCH, PSSCH, and PSFCH is located, or a time point corresponding to an offset prior to or behind the time point at which at least one of SL DCI, PSCCH, PSSCH, and PSFCH is located.

In another possible implementation, that the terminal performs the first operation based on the first status and the second status includes: in a case the first status is a first sub-status and the second status is a third sub-status, the terminal performs the first operation.

Same as the first sub-status in the foregoing possible implementation, the first sub-status in the possible implementation includes one of the following: no reporting resource being obtained and the reporting resource meeting a first condition. The third sub-status may include at least one of the following that: no sidelink feedback resource is obtained, no configuration of sidelink feedback resource is obtained, or the sidelink feedback resource meets a second condition; and feedback is enabled or feedback is disabled.

In the foregoing possible implementation, the first operation includes at least one of the following (1) to (5):
(1) Not starting the first timer, and/or not entering the inactive time, and/or starting the second timer, and/or entering the active time, and/or stopping the inactive time.

The first timer and the second timer in this possible implementation are the same as the first timer and the second timer in the foregoing possible implementation. For details, reference may be made to the descriptions in the foregoing possible implementation, and details are not repeated herein.

In this possible implementation, if no reporting resource or sidelink feedback resource is obtained, or an obtained reporting resource is unusable and no configuration of the sidelink feedback resource is obtained, it indicates that retransmission and retransmission scheduling based on the HARQ-ACK feedback cannot be implemented, and therefore there is no need to use or start the RTT timer. In this case, the first timer is not started.

In addition, no reporting resource or sidelink feedback resource is obtained; therefore, it cannot be determined at what time retransmission and retransmission scheduling are to be performed. In this way, the second timer may be directly started for monitoring, and/or the inactive time is not entered, and/or the active time is entered, and/or the inactive time is stopped, so as to perform monitoring.

Further, if the terminal has not received the control signaling and/or data from the network side device until the second timer expires, it indicates that the network side device may have no intention to continue scheduling, and therefore the terminal may no longer monitor the control channel and/or data, and/or enters dormancy to reduce power consumption.

(2) Determining that an obtained discontinuous reception DRX configuration does not include a first timer, and/or not entering the inactive time, and/or starting the second timer, and/or entering the active time, and/or stopping the inactive time.

In this possible implementation, determining that no RTT timer is included in the DRX configuration may mean that the RTT timer is not required.

In this possible implementation, if no reporting resource or sidelink feedback resource is obtained, or an obtained reporting resource is unusable and no configuration of the sidelink feedback resource is obtained, it indicates that retransmission and retransmission scheduling based on the HARQ-ACK feedback cannot be implemented, and therefore there is no need to use or start the RTT timer. In this way, determining that no RTT timer is included in the DRX configuration may be determining that the RTT timer is not required.

In addition, no reporting resource or sidelink feedback resource is obtained; therefore, it cannot be determined at what time retransmission and retransmission scheduling are to be performed. In this way, the second timer may be directly started for monitoring, and/or the inactive time is not entered, and/or the active time is entered, and/or the inactive time is stopped, so as to perform monitoring.

Further, if the terminal has not received the control signaling and/or data from the network side device until the second timer expires, it indicates that the network side device may have no intention to continue scheduling, and therefore the terminal may no longer monitor the control channel and/or data, and/or enters dormancy to reduce power consumption.

(3) Disabling the first timer, and/or not entering the inactive time, and/or starting the second timer, and/or entering the active time, and/or stopping the inactive time.

In this possible implementation, if no reporting resource or sidelink feedback resource is obtained, or an obtained reporting resource is unusable and no configuration of the sidelink feedback resource is obtained, it indicates that retransmission and retransmission scheduling based on the HARQ-ACK feedback cannot be implemented, and therefore there is no need to use or start the RTT timer. In this case, the first timer is disabled.

In addition, no reporting resource or sidelink feedback resource is obtained; therefore, it cannot be determined at what time retransmission and retransmission scheduling are to be performed. In this way, the second timer may be directly started for monitoring, and/or the inactive time is not entered, and/or the active time is entered, and/or the inactive time is stopped, so as to perform monitoring.

Further, if the terminal has not received the control signaling and/or data from the network side device until the second timer expires, it indicates that the network side device may have no intention to continue scheduling, and therefore the terminal may no longer monitor the control channel and/or data, and/or enters dormancy to reduce power consumption.

(4) Closing the first timer, and/or not entering the inactive time, and/or starting the second timer, and/or entering the active time, and/or stopping the inactive time.

In this possible implementation, if no reporting resource or sidelink feedback resource is obtained, or an obtained reporting resource is unusable and no configuration of the sidelink feedback resource is obtained, it indicates that retransmission and retransmission scheduling based on the HARQ-ACK feedback cannot be implemented, and therefore there is no need to use or start the RTT timer. In this case, the first timer is closed.

In addition, no reporting resource or sidelink feedback resource is obtained; therefore, it cannot be determined at what time retransmission and retransmission scheduling are to be performed. In this way, the second timer may be directly started for monitoring, and/or the inactive time is not entered, and/or the active time is entered, and/or the inactive time is stopped, so as to perform monitoring.

Further, if the terminal has not received the control signaling and/or data from the network side device until the second timer expires, it indicates that the network side device may have no intention to continue scheduling, and therefore the terminal may no longer monitor the control channel and/or data, and/or enters dormancy to reduce power consumption.

(5) Starting a first timer and/or entering an inactive time.

In this possible implementation, no reporting resource is obtained or the reporting resource is unusable, and therefore retransmission scheduling is required by default (which may, for example, be specified by the protocol or preconfigured). In this way, to reduce power consumption, the terminal starts the first timer and/or enters the inactive time, and after the first timer expires, monitors retransmission scheduling information.

For example, the UE starts the RTT timer at a time point A, where the time point A may be a time point at which SL DCI, PSCCH, and PSSCH are located, or a time point corresponding to an offset prior to or behind the time point at which SL DCI, PSCCH, and PSSCH are located.

For example, if no PUCCH is configured or if the PUCCH is configured but is unusable, and if no PSFCH is configured, the terminal does not start the RTT timer.

In the foregoing possible implementation, that the terminal performs the first operation may include: performing the first operation within a second time, where the second time includes one of the following: a first target time, a sum of the first target time and a third offset, and a difference between the first target time and a fourth offset.

That is, the terminal may perform the first operation when the second time arrives. That is, the terminal performs the first operation at a time point corresponding to the second time.

Optionally, the second time may be a time corresponding to Uu DRX configuration or SL DRX configuration.

The first target time is the same as the first target time in the foregoing possible implementation. For details, reference may be made to the descriptions in the foregoing possible implementation, and details are not repeated herein.

Optionally, the third offset and the fourth offset are one symbol or one slot. For example, the second time is a next symbol or next slot of the first target time. For example, if the first target time is a time at which the NACK is received or a time of the sidelink feedback resource, one implementation is that the second time is a next symbol or a next slot of the time at which the NACK is received or the time of the sidelink feedback resource.

In still another possible implementation, that the terminal performs the first operation based on the first status and the second status includes: in a case the first status is a fourth sub-status, the terminal performs the first operation.

The fourth sub-status includes: a reporting resource is configured or a reporting resource is scheduled. For details about the status of a reporting resource being configured or a reporting resource being scheduled, reference may be made to the descriptions in the foregoing possible implementation.

The first operation includes at least one of the following (1) and (2):
(1) Starting a first timer and/or entering an inactive time.

For example, the UE starts the RTT timer at a time point A, where the time point A may be a time point at which SL DCI, PSCCH, PSSCH, PSFCH, PUCCH, or PUSCH is located, or a time point corresponding to an offset prior to or behind the time point at which SL DCI, PSCCH, PSSCH, PSFCH, PUCCH, or PUSCH is located.

(2) Not monitoring target control information.

The target control information is the same as the target control information in the foregoing possible implementation. For details, reference may be made to the foregoing description of the target control information, and details are not repeated herein.

Optionally, the terminal may not monitor for the target control information for a period of time after start of a specific time point, for example, for a period of time starting from a time point B, the UE does not monitor for Uu DCI and/or SL DCI, and/or enters dormancy, to reduce power consumption.

In the foregoing possible implementation, in the fourth sub-status, it is considered by default that the second status is the sidelink feedback resource is obtained or a configuration of the sidelink feedback resource is obtained. For example, PSFCH or a configuration for PSFCH is obtained.

Alternatively, in a case that the first status is the fourth sub-status and the second status is the sidelink feedback resource is obtained or a configuration of the sidelink feedback resource is obtained, the first operation is performed.

For example, in a case that PUCCH is configured or PUCCH is scheduled (optionally, in this case, it can be considered that a PSFCH has been configured), the terminal starts the RTT timer.

In the foregoing possible implementation, the terminal may perform the first operation when the third time arrives. The third time may include one of the following: a second target time, a sum of the second target time and a fifth offset, and a difference between the second target time and a sixth offset.

Optionally, the fifth offset and the sixth offset may be one symbol or one slot. For example, the third time is a next symbol or next slot of the second target time. For example, if the second target time is a time at which the NACK is received or a time of the sidelink feedback resource, one implementation is that the third time is a next symbol or a next slot of the time at which the NACK is received or the time of the sidelink feedback resource.

In the foregoing possible implementation, optionally, the second target time includes at least one of the following:
(1) a start time or end time of a period of preset sidelink grant, for example, a start time or end time of a period of a sidelink grant obtained by the terminal;
(2) a time at which negative-acknowledgement feedback information is received; for example, a time point at which a NACK is received by the terminal; and
(3) a time corresponding to the preset reporting resource.

It should be noted that the above embodiments merely describe part of behaviors or a combination of part of behaviors included in the first operation in a case of the first status being a specific status or the first status being a specific status and the second status being a specific status, which is not limited thereto. In specific applications, the first operation may further include a combination of other behaviors. Details are not limited in this embodiment of this application.

It should be noted that the above describes the first operation performed by the terminal in several specific statuses of the reporting resource, sidelink feedback resource, and feedback being enabled, which is not limited thereto. In other specific statuses not given, the terminal may alternatively determine, based on the first status or based on the first status and the second status, the first operation to be performed.

Table 1 lists the first operation that may be performed by the terminal in various statuses in an optional implementation of this embodiment of this application.

**Table 1**

| Reporting resource | Sidelink feedback resource | Feedback being enabled | Feedback being disabled |
|---|---|---|---|
| Not configured or not obtained | Not configured or not obtained | N.A. | (1) Determining that an RTT timer is not included in DRX configuration/not starting the RTT timer/closing the RTT timer/disabling the RTT timer. |
| | | | (2) Starting a retransmission timer, where further optionally, if the retransmission timer expires, the terminal no longer monitors the control channel and/or data, and/or enters dormancy. |
| | | | (3) UE starts the RTT timer at a time point A (the time point A may be a time point at which SL DCI, PSCCH, and PSSCH are located, or a time point corresponding to an offset prior to or behind the time point at which SL DCI, PSCCH, and PSSCH are located). |
| | | | The foregoing (1) to (3) may be performed separately, or both (1) and (2) or both (2) and (3) are performed simultaneously. |
| | Having been configured or obtained | (1) UE starts the RTT timer at a time point A (the time point A may be a time point at which SL DCI, PSCCH, PSSCH, or PSFCH is located, or a time point corresponding to an offset prior to or behind the time point at which SL DCI, PSCCH, PSSCH, or PSFCH is located). | |
| | | (2) Determining that an RTT timer is not included in DRX configuration/not starting the RTT timer/closing the RTT timer/disabling the RTT timer. | |
| | | (3) (Optionally, within a period of time starting from a time point B) the UE does not monitor for Uu DCI and/or SL DCI, and/or enters dormancy. | |
| Having been obtained but being unusable (for example, having been configured but not actually being indicated or scheduled; or a configured reporting resource is invalid, discarded, knocked out by other transmissions, deprioritized, or disabled.) | Not configured or not obtained | N.A. | (1) Determining that an RTT timer is not included in DRX configuration/not starting the RTT timer/closing the RTT timer/disabling the RTT timer. |
| | | | (2) Starting a retransmission timer, where further optionally, if the retransmission timer expires, the terminal no longer monitors the control channel and/or data, and/or enters dormancy. |
| | | | (3) UE starts the RTT timer at a time point A (the time point A may be a time point at which SL DCI, PSCCH, and PSSCH are located, or a time point corresponding to an offset prior to or behind the time point at which SL DCI, PSCCH, PSSCH, PUCCH, or PUSCH is located). |
| | | | The foregoing (1) to (3) may be performed separately, or both (1) and (2) or both (2) and (3) are performed simultaneously. |
| | Having been configured or obtained | (1) UE starts the RTT timer at a time point A (the time point A may be a time point at which SL DCI, PSCCH, PSSCH, PSFCH, PUCCH, or PUSCH is located, or a time point corresponding to an offset prior to or behind the time point at which SL DCI, PSCCH, PSSCH, PSFCH, PUCCH, or PUSCH is located); or | |
| | | (2) Determining that an RTT timer is not included in DRX configuration/not starting the RTT timer/closing the RTT timer/disabling the RTT timer; or | |
| | | (3) (Optionally, within a period of time starting from a time point B) the UE does not monitor for Uu DCI and/or SL DCI, and/or enters dormancy. | |
| Having been configured, and having been indicated or scheduled or expected to be transmitted normally | Not configured or not obtained | N.A. | |
| | Having been configured or obtained | (1) UE starts the RTT timer at a time point A (the time point A may be a time point at which SL DCI, PSCCH, PSSCH, PSFCH, PUCCH, or PUSCH is located, or a time point corresponding to an offset prior to or behind the time point at which SL DCI, PSCCH, PSSCH, PSFCH, PUCCH, or PUSCH is located). | |
| | | | (2) (Optionally, within a period of time starting from a time point B) the UE does not monitor for Uu DCI and/or SL DCI, and/or enters dormancy. |

In the table, N.A. indicates that such a status (or referred to as a combination thereof) may not be present, or such as status is an error case (error case), or the terminal does not expect occurrence of such a status.

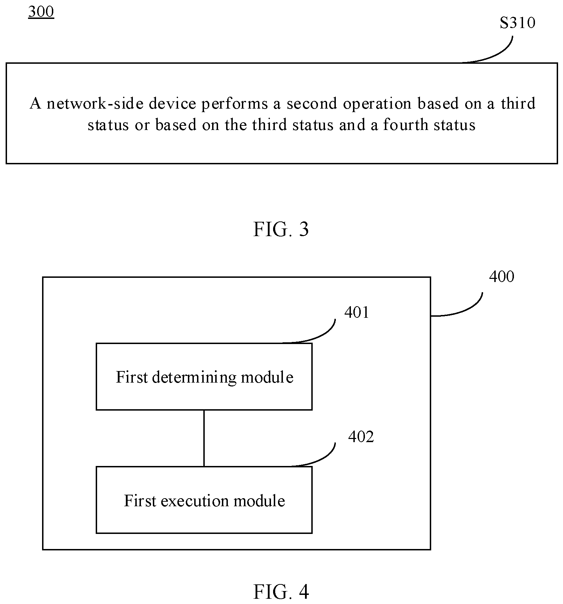

FIG. 3 is a schematic flowchart of another transmission control method according to an embodiment of this application. The method 300 may be executed by a network side device. In other words, the method may be performed by software or hardware installed on the network side device. As shown in FIG. 3, the method may include the following step.

S310: A network side device performs a second operation based on a third status or based on the third status and a fourth status.

The second operation is an operation related to DRX.

The third status includes: a status of a reporting resource; and the fourth status includes at least one of the following: a status of a sidelink feedback resource and a feedback enablement status.

The transmission control method 300 provided in the embodiments of this application is steps of a network side device method corresponding to the method 200, and has the same or corresponding possible implementations as in the method 200. The following mainly describes part of the method 300 that is different from the method 200. For other parts that are the same or corresponding ports, reference may be made to the related description of the method 200.

In a possible implementation, similar to the first status in the method 200, the third status may include at least one of the following (I) to (IV).
(I) The reporting resource having not been configured.
   For example, the network side device does not provide a PUCCH configuration for the terminal, or SL CG configuration configured for the terminal by the network side device includes no information about PUCCH.
(II) The reporting resource meets a first condition. For example, the reporting resource configured by the network side device for the terminal meets the first condition. In a case that the reporting resource meets the first condition, the reporting resource is unusable.

Optionally, the reporting resource meeting the first condition may include at least one of the following (1) to (20).
(1) No reporting resource has been scheduled. For example, no PUCCH is scheduled in the SL DCI sent by the network side device to the terminal.
(2) Sidelink DCI indicates absence of the reporting resource. For example, absence of the PUCCH is indicated in the SL DCI sent by the network side device to the terminal.
(3) The reporting resource is not indicated in sidelink DCI. For example, the PUCCH is not indicated in the SL DCI sent by the network side device to the terminal.
(4) The reporting resource is not included in SL CG configuration. For example, the PUCCH is not included in the SL CG configuration configured by the network side device for the terminal.
(5) SL CG configuration indicates absence of the reporting resource. For example, absence of the PUCCH is indicated in the SL CG configuration configured by the network side device for the terminal.
(6) At least part of resources indicated by SL CG or SL DCI is not used. For example, all of the resources indicated by SL CG or SL DCI are invalid.
(7) Transmission of at least part of resources indicated by SL CG or SL DCI is dropped.
(8) Transmission of at least part of resources indicated by SL CG or SL DCI is cancelled.
(9) A priority of at least part of resources indicated by SL CG or SL DCI is a first priority.
(10) A priority of at least part of resources indicated by SL CG or SL DCI is decreased.
(11) A priority of at least part of resources indicated by SL CG or SL DCI is a second value.
(12) At least part of resources indicated by SL CG or SL DCI has no corresponding priority.
(13) At least part of resources indicated by SL CG or SL DCI is invalid.
(14) Transmission of the reporting resource is canceled. For example, the PUCCH transmission conflicts with other transmissions such that the PUCCH transmission is canceled.
(15) Transmission of the reporting resource is dropped. For example, the PUCCH resource overlaps with resources of other transmissions such that the PUCCH resource is dropped.
(16) A priority of the reporting resource is a second priority.
(17) A priority of the reporting resource has been decreased. For example, the PUCCH resource overlaps with resources of other transmissions and the priority of the PUCCH resource is decreased; therefore, the transmission cannot be implemented.
(18) A priority of the reporting resource is lower than a first value. For example, the priority of the PUCCH is lower than the first value and does not meet a prioritized transmission condition; therefore, the PUCCH transmission cannot be implemented.
(19) The reporting resource has no corresponding priority. For example, the reporting resource does not have a corresponding Uu priority, or, the reporting resource does not have a corresponding sidelink priority, so that the reporting resource cannot be used for reporting SL HARQ ACK.
(20) The reporting resource is invalid. For example, the PUCCH is invalid and therefore cannot be used for transmission.
   (III) The reporting resource having been configured. For example, the network side device provides a PUCCH configuration to the terminal, or the SL CG configuration configured by the network side device for the terminal includes information about the PUCCH and indicates or schedules or expects to normally transmit the PUCCH. In this possible implementation, the sidelink feedback resource or a configuration of the sidelink feedback resource can be obtained by default in this status.
   (IV) The reporting resource having been scheduled. For example, the PUCCH has been scheduled by SL DCI. In this possible implementation, the sidelink feedback resource or a configuration of the sidelink feedback resource can be obtained by default in this status.

In a possible implementation, a reporting resource being configured or a reporting resource being scheduled may include at least one of (1) to (6):
(1) The reporting resource having been configured. For example, the network side device provides a PUCCH configuration for the terminal, or SL CG configuration configured for the terminal by the network side device includes information about the PUCCH.
(2) The reporting resource being scheduled. For example, the PUCCH is scheduled by the SL DCI sent by the network side device.
(3) The reporting resource having been indicated by SL DCI. For example, the PUCCH has been indicated by SL DCI.
(4) Presence of the reporting resource having been indicated by SL DCI. For example, presence of the PUCCH has been indicated by SL DCI.
(5) The reporting resource being included in SL CG configuration. For example, the PUCCH is included in the SL CG configuration.
(6) Presence of the reporting resource having been indicated by SL CG configuration. For example, presence of the PUCCH is indicated in the SL CG configuration.

In a possible implementation, the status of the sidelink feedback resource includes at least one of the following (I) to (III):
(I) The sidelink feedback resource having been configured. For example, the network side device configures a PSFCH in the SL DCI.
(II) No configuration of sidelink feedback resource having been configured. For example, the network side device configures no PSFCH in the SL DCI.
(III) The sidelink feedback resource meets a second condition. For example, the sidelink feedback resource configured by the network side device for the terminal meets the second condition. The sidelink feedback resource meeting the second condition may indicate that the sidelink feedback resource is unusable. Optionally, the sidelink feedback resource meeting the second condition may include at least one of the following that:
   (1) transmission of the sidelink feedback resource is dropped;
   (2) transmission of the sidelink feedback resource is cancelled;
   (3) a priority of the sidelink feedback resource is a third priority;
   (4) a priority of the sidelink feedback resource is decreased;
   (5) a priority of the sidelink feedback resource is a third value;
   (6) the sidelink feedback resource has no corresponding priority; and
   (7) the sidelink feedback resource is invalid.

In a possible implementation, the feedback enablement status includes at least one of the following:
(I) Feedback been enabled, where for example, SL HARQ-ACK is enabled, or no logical channel (or logical channel group) with feedback being disabled is configured, or feedback is enabled for all configured logical channels (or logical channel group), or at least one logical channel (or logical channel group) with feedback being enabled is configured.
(II) Feedback being disabled, where for example, SL HARQ-ACK is disabled, or no logical channel (or logical channel group) with feedback being enabled is configured, or feedback is disabled for all configured logical channels (or logical channel group).

In a possible implementation of S310, the network side device performs the second operation in a case that the third status is a fifth sub-status and the fourth status is a sixth sub-status, where the second operation includes one of the following (1) to (6):
(1) Determining to start a first timer and/or determining to enter an inactive time; where the network side device determining to start the first timer may be the network side device determining to start a first timer of the terminal, or the network side device may set one first timer for the terminal, and the network side device determining to start the first timer is the network side device starting the first timer. The network side device determining to enter the inactive time means that the network side device determines that the terminal enters the inactive time, and during the inactive time, the network side device does not transmit control signaling and/or data to the terminal.

Optionally, the network side device does not need to transmit control signaling and/or data during running of the first timer; and/or the first timer is a HARQ RTT timer.

(2) Determining not to start the first timer, and/or determining not to enter the inactive time, and/or determining to start the second timer, and/or determining to enter the active time, and/or stopping the inactive time.

The network side device determining not to start the first timer may be the network side device determining not to start a first timer of the terminal, or the network side device may set one first timer for the terminal, and the network side device determining not to start the first timer is the network side device not starting the first timer. The network side device determining not to enter the inactive time means that the network side device determines that the terminal does not enter the inactive time, and the network side device may transmit control signaling and/or data to the terminal.

Similarly, the network side device determining to start the second timer may be the network side device determining to start a second timer of the terminal, or the network side device may set one second timer for the terminal, and the network side device determining to start the second timer is the network side device starting the second timer.

Optionally, the network side device does not need to transmit control signaling and/or data during running of the second timer; and/or the second timer is a retransmission timer.
(3) Determining that a configured DRX configuration does not include a first timer, and/or not entering the inactive time, and/or starting the second timer, and/or entering the active time, and/or stopping the inactive time.
(4) Determining to disable the first timer, and/or not entering the inactive time, and/or starting the second timer, and/or entering the active time, and/or stopping the inactive time.

The network side device determining to disable the first timer may be the network side device determining to disable a first timer of the terminal, or the network side device may set one first timer for the terminal, and the network side device determining to disable the first timer is disabling the first timer of the network side device.

(5) Determining to stop the first timer, and/or not entering the inactive time, and/or starting the second timer, and/or entering the active time, and/or stopping the inactive time.

The network side device determining to stop the first timer may be the network side device determining to stop a first timer of the terminal, or the network side device may set one first timer for the terminal, and the network side device determining to disable the first timer is stopping the first timer of the network side device.

(6) Not transmitting target control information.

The fifth sub-status includes one of the following that: no reporting resource is configured and a reporting resource meets a first condition.

The sixth sub-status includes at least one of the following that: the sidelink feedback resource is configured; and feedback is enabled or feedback is disabled.

In the foregoing possible implementation, the network side device may perform the second operation when the first time arrives, where the first time includes one of the following: a first target time, a sum of the first target time and a first offset, and a difference between the first target time and a second offset.

The first time is the same as or corresponding to the first time in the method 200. For details, refer to the description in the method 200.

In another possible implementation of S310, the network side device performs the second operation in a case that the third status is a fifth sub-status and the fourth status is a seventh sub-status. The second operation includes one of the following (1) to (5):
(1) Determining not to start the first timer, and/or determining not to enter the inactive time, and/or determining to start the second timer, and/or determining to enter the active time, and/or stopping the inactive time.
(2) Determining that an obtained discontinuous reception DRX configuration does not include a first timer, and/or not entering the inactive time, and/or starting the second timer, and/or entering the active time, and/or stopping the inactive time.
(3) Determining to disable the first timer, and/or not entering the inactive time, and/or starting the second timer, and/or entering the active time, and/or stopping the inactive time.
(4) Determining to stop the first timer, and/or not entering the inactive time, and/or starting the second timer, and/or entering the active time, and/or stopping the inactive time.
(5) Determining to start a first timer and/or entering an inactive time.

The meanings of determining to start the first timer, not starting the first timer, and starting the second timer are the same as those in the foregoing possible implementations, and details are not repeated herein.

The fifth sub-status includes one of the following that: no reporting resource is configured and a reporting resource meets a first condition.

The seventh sub-status includes at least one of the following: no sidelink feedback resource having been configured or the sidelink feedback resource meets a second condition; and feedback is enabled or feedback is disabled.

In the foregoing possible implementation, optionally, the network side device may perform the second operation at a second time (that is, when the second time arrives). The second time includes one of the following: a first target time, a sum of the first target time and a third offset, and a difference between the first target time and a fourth offset.

The second time is the same as or corresponding to the second time in the method 200, and details are not repeated herein.

Optionally, the first target time may include at least one of the following (1) to (7).
(1) A time of preset sidelink DCI; for example, a time for SL DCI sent by the network side device.
(2) A time of a preset transmission, for example, a time at which the N-th transmission (for example, the first or the last transmission) in a grant provided in the SL DCI sent by the network side device is located. Optionally, the transmission may be a PSCCH or first-stage (first stage) SCI, for example, SCI format 1-A. Alternatively, the transmission may alternatively be second-stage (2nd stage) SCI, for example, SCI format 2-A or SCI format 2-B. Alternatively, the transmission may be PSSCH.
(3) A time of the preset sidelink feedback resource; for example, a time at which a sidelink feedback resource corresponding to the M-th transmission (for example, the first or the last transmission) in a grant provided in the SL DCI sent by the network side device is located, for example, a time at which a PSFCH corresponding to a specific transmission is located.
(4) A start time or end time of a period of preset sidelink grant; for example, a start time or end time of a period of sidelink grant provided in the SL DCI sent by the network side device.
(5) A time at which negative-acknowledgement information has been received.
(6) A time at which a scheduling failure occurs.
(7) A time corresponding to a preset reporting resource, for example, a time corresponding to a PUCCH configuration provided by the network side device to the terminal. This applies to a case that the third status includes the reporting resource being unusable.

In another possible implementation of S310, the network side device performs the second operation in a case that the third status is an eighth sub-status, where the second operation includes at least one of the following (1) and (2):
(1) Determining to start a first timer and/or determining to enter an inactive time.

Determining to start the first timer has the same meaning as that in the foregoing possible implementations, and details are not repeated herein.

(2) Not transmitting target control information.

The eighth sub-status includes: a reporting resource is configured or a reporting resource is scheduled.

In the foregoing possible implementation, in a case that the third status is the eighth sub-status, the sidelink feedback resource may be configured by default, for example, a PSFCH has been configured. Alternatively, the second operation may be performed in a case that the third status is the eighth sub-status and the fourth status is the sidelink feedback resource having been configured.

In the foregoing possible implementation, the network side device may perform the second operation at a third time (that is, when the third time arrives). The third time includes one of the following: a second target time, a sum of the second target time and a fifth offset, and a difference between the second target time and a sixth offset.

The third time is the same as or corresponding to the third time in the method 200. For details, refer to the description in the method 200.

In a possible implementation, the second target time includes at least one of the following (1) to (3):
(1) A start time or end time of a period of preset sidelink grant; for example, a start time or end time of a period of sidelink grant provided in the SL DCI sent by the network side device.
(2) A time at which negative-acknowledgement feedback information has been received.
(3) A time corresponding to the preset reporting resource, for example, a time corresponding to a PUCCH configuration provided by the network side device to the terminal.

In the foregoing possible implementation, optionally, the target control information may include: target DCI and/or target SCI; where the target DCI includes at least one of the following: sidelink DCI and Uu DCI.

In the following embodiments, the transmission control method provided in the embodiments of this application is described by using the reporting resource being a PUCCH or a PUSCH and the sidelink feedback resource being a PSFCH as an example.

### Embodiment 1

In this embodiment, the UE is not configured with PUCCH or PUSCH, and is neither configured with PSFCH.

Step 1: During configuration for the UE, the base station does not configure, for the UE, a PUCCH or PUSCH resource for reporting HARQ feedback (feedback) related to a UE sidelink process (process).

Step 2: The base station configures no PSFCH resource for the UE and/or neither configures any HARQ-enabled logical channel for the UE.

During specific implementation, a sequence of steps 1 and 2 is not fixed.

Step 3: The UE performs at least one of the following behaviors:
- Not requiring a HARQ RTT timer or not starting a HARQ RTT timer (for example, closing the HARQ RTT timer), where not requiring a HARQ RTT timer indicates that the DRX configuration does not include a HARQ RTT timer.
- Starting a retransmission timer at the following time point: a next symbol or slot upon reception of a PSFCH sent by the peer UE.
- Entering dormancy if the retransmission timer expires. For example, in this case, it can be considered that the base station has no intention to continue scheduling or schedule retransmission, and the UE enters dormancy for power saving.

### Embodiment 2

In this embodiment, the UE is not configured with a PUCCH or PUSCH, but is configured with a PSFCH.

Step 1: The base station does not configure, for the UE, a PUCCH or PUSCH resource for reporting HARQ feedback related to a UE sidelink process.

Step 2: The base station configures a PSFCH resource for the UE and/or configures at least one HARQ-enabled logical channel for the UE.

During specific implementation, a sequence of steps 1 and 2 is not fixed.

In step 3, the UE starts the HARQ RTT timer at the following time points:
- upon reception of DCI for scheduling data transmission from the base station;
- a next symbol or slot after the 1st SCI is sent;
- a next symbol or slot after the 2nd SCI is sent;
- a next symbol or slot after the data PSSCH is sent;
- a next symbol or slot after the PSFCH is received from the peer UE; and
- a next symbol or slot after a PSFCH on which a feedback is predicted to be received from the peer UE.

Step 4: The UE starts the retransmission timer after the HARQ RTT timer expires.

### Embodiment 3

In this embodiment, the UE is not configured with a PUCCH or PUSCH but is configured with a PSFCH, the HARQ RTT timer is not started, and the retransmission timer may be started.

Step 1: same as step 1 in Embodiment 2.

Step 2: same as step 2 in Embodiment 2.

Step 3: same as step 3 in Embodiment 1.

### Embodiment 4

In this embodiment, the UE is configured with a PUCCH, but is not configured with a PSFCH.

Step 1: The base station configures, for the UE, a PUCCH or PUSCH resource for reporting HARQ feedback related to a UE sidelink process.

Step 2: The base station configures no PSFCH resource for the UE and/or neither configures any HARQ-enabled logical channel for the UE.

During specific implementation, a sequence of steps 1 and 2 is not fixed.

Step 3: The UE performs at least one of the following behaviors:
- Not requiring the HARQ RTT timer or not starting the HARQ RTT timer.
- Starting a retransmission timer at the following time point: a next symbol or slot upon reception of a PSFCH sent by the peer UE.
- Entering dormancy if the retransmission timer expires. For example, in this case, it can be considered that the base station has no intention to continue scheduling or schedule retransmission, and therefore the UE enters dormancy.

### Embodiment 5

In this embodiment, the UE is configured with a PUCCH and also configured with a PSFCH, and the UE starts the HARQ RTT timer.

Step 1: The base station configures, for the UE, a PUCCH or PUSCH resource for reporting HARQ feedback related to a UE sidelink process.

Step 2: The base station configures a PSFCH resource for the UE and/or configures at least one HARQ-enabled logical channel for the UE.

During specific implementation, a sequence of steps 1 and 2 is not fixed.

In step 3, the UE starts the HARQ RTT timer at the following time points:
- upon reception of DCI for scheduling data transmission from the base station;
- a next symbol or slot after the 1st SCI is sent;
- a next symbol or slot after the 2nd SCI is sent;
- a next symbol or slot after the data PSSCH is sent;
- a next symbol or slot after the PSFCH is received from the peer UE; and
- a next symbol or slot upon transmission of a HARQ feedback related to the sidelink process on the PUCCH or PUSCH.

Step 4: The UE starts the retransmission timer after the HARQ RTT timer expires.

Step 5: Optionally, if the network side device does not actually indicate or schedule a PUCCH or PUSCH, or a configured PUCCH is invalid or discarded or knocked out by other transmissions, the UE performs at least one of the following behaviors:
- Not requiring the HARQ RTT timer or not starting the HARQ RTT timer.
- Starting a retransmission timer at the following time point: a next symbol or slot upon reception of a PSFCH sent by the peer UE.
- Entering dormancy if the retransmission timer expires. For example, in this case, it can be considered that the base station has no intention to continue scheduling or schedule retransmission.

### Embodiment 6

In this embodiment, the UE is configured with a PUCCH and also configured with a PSFCH, and the UE does not start the HARQ RTT timer.

Step 1: The base station configures, for the UE, a PUCCH or PUSCH resource for reporting HARQ feedback related to a UE sidelink process.

Step 2: The base station configures a PSFCH resource for the UE and/or configures at least one HARQ-enabled logical channel for the UE.

During specific implementation, a sequence of steps 1 and 2 is not fixed.

Step 3: The UE performs at least one of the following behaviors:
- Not requiring the HARQ RTT timer or not starting the HARQ RTT timer.
- Starting the retransmission timer at the following time points: a next symbol or slot after the PSFCH is received from the peer UE; and
- Entering dormancy if the retransmission timer expires. For example, in this case, it can be considered that the base station has no intention to continue scheduling or schedule retransmission.

Step 4: The UE starts the retransmission timer after the HARQ RTT timer expires.

It should be noted that, for the transmission control method provided by the embodiments of this application, the execution body may be a transmission control apparatus, or a control module for executing the transmission control method in the transmission control apparatus. In the embodiments of this application, the transmission control method being performed by the transmission control apparatus is used as an example to describe the transmission control apparatus provided in the embodiments of this application.

FIG. 4 shows a schematic structural diagram of a transmission control apparatus according to an embodiment of this application. As shown in FIG. 4, the apparatus 400 mainly includes: a first determining module 401 and a first execution module 402.

In this embodiment of this application, the first determining module 401 is configured to determine a first status, or the first status and a second status; and the first execution module 402 is configured to, based on the first status or based on the first status and the second status, perform a first operation related to discontinuous reception DRX; where the first status includes: a status of a reporting resource; and the second status includes at least one of the following: a status of a sidelink feedback resource and a feedback enablement status.

In a possible implementation, the first status includes at least one of the following that:
no reporting resource is obtained;
a reporting resource meets a first condition;
a reporting resource is configured; and
a reporting resource is scheduled.

In a possible implementation, the status of the sidelink feedback resource includes at least one of the following that:
the sidelink feedback resource is obtained;
a configuration of the sidelink feedback resource is obtained;
no sidelink feedback resource is obtained;
no configuration of the sidelink feedback resource is obtained; and
the sidelink feedback resource meets a second condition.

In a possible implementation, the feedback enablement status includes at least one of the following that: feedback is enabled and feedback is disabled.

The terminal performs the first operation in a case that the first status is a first sub-status and the second status is a second sub-status, where the first operation includes one of the following:
a first sub-operation, where the first sub-operation includes at least one of the following: starting a first timer and entering an inactive time;
a second sub-operation, where the second sub-operation includes at least one of the following: determining that an obtained discontinuous reception DRX configuration does not include a first timer, not entering the inactive time, starting a second timer, entering an active time, and stopping the inactive time;
a third sub-operation, where the third sub-operation includes at least one of the following: not starting the first timer, not entering the inactive time, starting the second timer, entering the active time, and stopping the inactive time;
a fourth sub-operation, where the fourth sub-operation includes at least one of the following: disabling the first timer, not entering the inactive time, starting the second timer, entering the active time, and stopping the inactive time;
a fifth sub-operation, where the fifth sub-operation includes at least one of the following: stopping the first timer, not entering the inactive time, starting the second timer, entering the active time, and stopping the inactive time; and
not monitoring target control information; where
the first sub-status includes one of the following:
   no reporting resource is obtained; and a reporting resource meets a first condition; and
   the second sub-status includes at least one of the following that:
      a sidelink feedback resource is obtained or a configuration of sidelink feedback resource is obtained; and
      feedback is enabled or feedback is disabled.

In a possible implementation, that the first execution module 402 performs the first operation includes:
performing the first operation at a first time; where
the first time includes one of the following: a first target time, a sum of the first target time and a first offset, and a difference between the first target time and a second offset.

In a possible implementation, that the first execution module 402 performs the first operation based on the first status and the second status includes:
performing, for the terminal, the first operation in a case that the first status is a first sub-status and the second status is a third sub-status; where
the first operation includes one of the following:
   a sixth sub-operation, where the sixth sub-operation includes at least one of the following: not starting a first timer, not entering an inactive time, starting a second timer, entering an active time, and stopping the inactive time;
   a seventh sub-operation, where the seventh sub-operation includes at least one of the following: determining that an obtained discontinuous reception DRX configuration does not include a first timer, not entering the inactive time, starting the second timer, entering the active time, and stopping the inactive time;
   an eighth sub-operation, where the eighth sub-operation includes at least one of the following: disabling the first timer, not entering the inactive time, starting the second timer, entering the active time, and stopping the inactive time;
   a ninth sub-operation, where the ninth sub-operation includes at least one of the following: stopping the first timer, not entering the inactive time, starting the second timer, entering the active time, and stopping the inactive time; and
   a tenth sub-operation, where the tenth sub-operation includes at least one of the following: starting the first timer and entering the inactive time; where
   the first sub-status includes one of the following: no reporting resource is obtained and a reporting resource meets a first condition; and
   the third sub-status includes at least one of the following that:
      no sidelink feedback resource is obtained, no configuration of sidelink feedback resource is obtained, or the sidelink feedback resource meets a second condition; and
      feedback is enabled or feedback is disabled.

In a possible implementation, that the first execution module 402 performs the first operation includes:
performing the first operation within a second time; where
the second time includes one of the following: a first target time, a sum of the first target time and a third offset, and a difference between the first target time and a fourth offset.

In a possible implementation, the first target time includes at least one of the following:
a time of preset sidelink SL downlink control information DCI;
a time of a preset transmission;
a time of the preset sidelink feedback resource;
a start time or end time of a period of preset sidelink grant;
a time at which negative-acknowledgement information is sent or received;
a time at which a transmission failure is determined; and
a time corresponding to a preset reporting resource.

In a possible implementation, the reporting resource having met the first condition includes at least one of the following that:
no reporting resource is scheduled;
SL DCI indicates absence of the reporting resource;
the reporting resource is not indicated in SL DCI;
the reporting resource is not included in SL configured grant CG configuration;
SL CG configuration indicates absence of the reporting resource;
at least part of resources indicated by SL CG or SL DCI is not used;
transmission of at least part of resources indicated by SL CG or SL DCI is dropped;
transmission of at least part of resources indicated by SL CG or SL DCI is cancelled;
a priority of at least part of resources indicated by SL CG or SL DCI is a first priority;
a priority of at least part of resources indicated by SL CG or SL DCI is decreased;
a priority of at least part of resources indicated by SL CG or SL DCI is a second value;
at least part of resources indicated by SL CG or SL DCI have no corresponding priority;
at least part of resources indicated by SL CG or SL DCI is invalid;
transmission of the reporting resource is canceled;
transmission of the reporting resource is dropped;
a priority of the reporting resource is a second priority;
a priority of the reporting resource is decreased;
a priority of the reporting resource is lower than a first value;
the reporting resource has no corresponding priority; and
the reporting resource is invalid.

In a possible implementation, the sidelink feedback resource meeting a second condition includes at least one of the following that:
transmission of the sidelink feedback resource is dropped;
transmission of the sidelink feedback resource is cancelled;
a priority of the sidelink feedback resource is a third priority;
a priority of the sidelink feedback resource is decreased;
a priority of the sidelink feedback resource is a third value;
the sidelink feedback resource has no corresponding priority; and
the sidelink feedback resource is invalid.

In a possible implementation, that the first execution module 402 performs the first operation based on the first status and the second status includes:
performing the first operation in a case that the first status is a fourth sub-status; where
the first operation includes at least one of the following:
   starting a first timer and/or entering an inactive time; and
   not monitoring target control information; where
   the fourth sub-status includes: a reporting resource is configured or a reporting resource is scheduled.

In a possible implementation, that the first execution module 402 performs the first operation includes:
performing the first operation at a third time; where
the third time includes one of the following: a second target time, a sum of the second target time and a fifth offset, and a difference between the second target time and a sixth offset.

In a possible implementation, the second target time includes at least one of the following:
an end time of a period of preset sidelink grant;
a time at which negative-acknowledgement feedback information has been received; and
a time corresponding to the preset reporting resource.

In a possible implementation, a reporting resource being configured or a reporting resource being scheduled includes at least one of the following that:
the reporting resource is obtained;
a configuration for the reporting resource is obtained;
a reporting resource is scheduled;
the reporting resource having been indicated in SL DCI;
presence of the reporting resource is indicated in SL DCI;
the reporting resource being included in SL CG configuration; and
presence of the reporting resource is indicated in SL CG configuration.

In a possible implementation, the target control information includes: target downlink control information DCI and/or target sidelink control information SCI, where
the target DCI includes at least one of the following: SL DCI and Uu DCI.

In a possible implementation, the terminal does not need to monitor control signaling and/or data during running of the first timer; and/or the first timer is a hybrid automatic repeat request HARQ round trip time RTT timer.

In a possible implementation, the terminal monitors control signaling and/or data during running of the second timer; and/or the second timer is a retransmission timer.

The transmission control apparatus in this embodiment of this application may be an apparatus, or may be a component, an integrated circuit, or a chip in a terminal. The apparatus may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine, or the like, which is not specifically limited in this embodiment of this application.

The transmission control apparatus in this embodiment of this application may be an apparatus with an operating system. The operating system may be an Android (Android) operating system, an iOS operating system, or other possible operating systems, and is not specifically limited in the embodiments of this application.

The transmission control apparatus provided in this embodiment of this application can implement the processes implemented in the method embodiment in FIG. 2, with the same technical effects achieved. To avoid repetition, details are not described herein again.

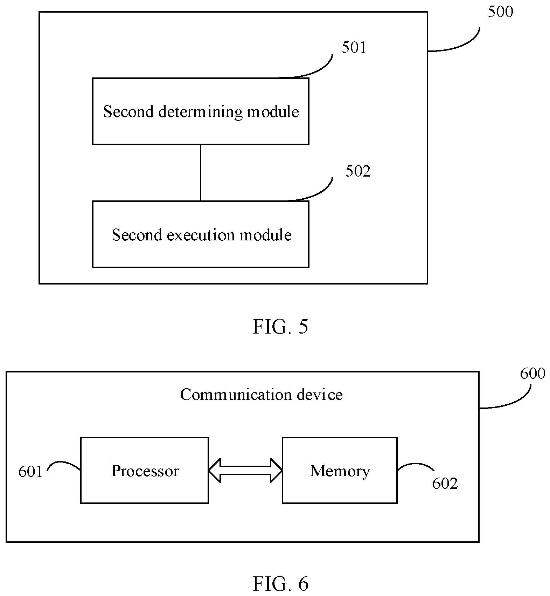

FIG. 5 shows a schematic structural diagram of another transmission control apparatus according to an embodiment of this application. As shown in FIG. 5, the apparatus 500 mainly includes: a second determining module 501 and a second execution module 502.

In this embodiment of this application, the second determining module 501 is configured to determine a third status, or the third status and a fourth status; and the second execution module 502 is configured to, based on the third status or based on the third status and the fourth status, perform a second operation related to discontinuous reception DRX; where the third status includes: a status of a reporting resource; and the fourth status includes at least one of the following: a status of a sidelink feedback resource and a feedback enablement status.

In a possible implementation, the third status includes at least one of the following that:
a reporting resource has not been configured;
a reporting resource meets a first condition;
a reporting resource is configured; and
a reporting resource is scheduled.

In a possible implementation, the status of the sidelink feedback resource includes at least one of the following that:
the sidelink feedback resource is configured;
the sidelink feedback resource is not configured; and
the sidelink feedback resource meets a second condition.

In a possible implementation, the feedback enablement status includes at least one of the following that: feedback is enabled and feedback is disabled.

In a possible implementation, that the second execution module 502 performs the second operation based on the third status and the fourth status includes:
performing, for the network side device, the second operation in a case that the third status is a fifth sub-status and the fourth status is a sixth sub-status, where the second operation includes one of the following:
an eleventh sub-operation, where the eleventh sub-operation includes at least one of the following: determining to start the first timer and determining to enter the inactive time;
a twelfth sub-operation, where the twelfth sub-operation includes at least one of the following: determining that an obtained discontinuous reception DRX configuration does not include a first timer, not entering the inactive time, starting a second timer, entering an active time, and stopping the inactive time;
a thirteenth sub-operation, where the thirteenth sub-operation includes at least one of the following: determining not to start the first timer, determining not to enter the inactive time, determining to start the second timer, determining to enter the active time, and stopping the inactive time;
a fourteenth sub-operation, where the fourteenth sub-operation includes at least one of the following: disabling the first timer, not entering the inactive time, starting the second timer, entering the active time, and stopping the inactive time;
a fifteenth sub-operation, where the fifteenth sub-operation includes at least one of the following: determining to stop the first timer, not entering the inactive time, starting the second timer, entering the active time, and stopping the inactive time; and
not transmitting target control information; where
the fifth sub-status includes one of the following that:
   a reporting resource has not been configured; and
   a reporting resource meets a first condition;
   the sixth sub-status includes at least one of the following that:
      the sidelink feedback resource is configured; and
      feedback is enabled or feedback is disabled.

In a possible implementation, that the second execution module 502 performs the second operation includes:
performing, for the network side device, the second operation at a first time; where
the first time includes one of the following: a first target time, a sum of the first target time and a first offset, and a difference between the first target time and a second offset.

In a possible implementation, that the second execution module 502 performs the second operation based on the third status and the fourth status includes:
performing, for the network side device, the second operation in a case that the third status is a fifth sub-status and the fourth status is a seventh sub-status; where
the second operation includes one of the following:
   a sixteenth sub-operation, where the sixteenth sub-operation includes at least one of the following: determining not to start the first timer, determining not to enter the inactive time, determining to start the second timer, determining to enter the active time, and stopping the inactive time;
   a seventeenth sub-operation, where the seventeenth sub-operation includes at least one of the following: determining that an obtained discontinuous reception DRX configuration does not include a first timer, not entering the inactive time, starting a second timer, entering an active time, and stopping the inactive time;
   an eighteenth sub-operation, where the eighteenth sub-operation includes at least one of the following: disabling the first timer, not entering the inactive time, starting the second timer, entering the active time, and stopping the inactive time;
   a nineteenth sub-operation, where the nineteenth sub-operation includes at least one of the following: determining to stop the first timer, not entering the inactive time, starting the second timer, entering the active time, and stopping the inactive time; and
   a twentieth sub-operation, where the twentieth sub-operation includes at least one of the following: determining to start the first timer and entering the inactive time.

The fifth sub-status includes one of the following that:
a reporting resource has not been configured; and
a reporting resource meets a first condition.

The seventh sub-status includes at least one of the following:
no sidelink feedback resource having been configured or the sidelink feedback resource meets a second condition; and
feedback is enabled or feedback is disabled.

In a possible implementation, that the second execution module 502 performs the second operation includes:
performing the second operation at a second time; where
the second time includes one of the following: a first target time, a sum of the first target time and a third offset, and a difference between the first target time and a fourth offset.

In a possible implementation, the first target time includes at least one of the following:
a time of preset sidelink DCI;
a time of a preset transmission;
a time of the preset sidelink feedback resource;
a start time or end time of a period of preset sidelink grant;
a time at which negative-acknowledgement information has been received;
a time at which a scheduling failure occurs; and
a time corresponding to a preset reporting resource.

In a possible implementation, the reporting resource having met the first condition includes at least one of the following that:
no reporting resource is scheduled;
sidelink DCI indicates absence of the reporting resource;
the reporting resource is not indicated in sidelink DCI;
the reporting resource is not included in SL CG configuration;
SL CG configuration indicates absence of the reporting resource;
at least part of resources indicated by SL CG or SL DCI is not used;
transmission of at least part of resources indicated by SL CG or SL DCI is dropped;
transmission of at least part of resources indicated by SL CG or SL DCI is cancelled;
a priority of at least part of resources indicated by SL CG or SL DCI is a first priority;
a priority of at least part of resources indicated by SL CG or SL DCI is decreased;
a priority of at least part of resources indicated by SL CG or SL DCI is a second value;
at least part of resources indicated by SL CG or SL DCI have no corresponding priority;
at least part of resources indicated by SL CG or SL DCI is invalid;
transmission of the reporting resource is canceled;
transmission of the reporting resource is dropped;
a priority of the reporting resource is a second priority;
a priority of the reporting resource is decreased;
a priority of the reporting resource is lower than a first value;
the reporting resource has no corresponding priority; and
the reporting resource is invalid.

In a possible implementation, the sidelink feedback resource meeting a second condition includes at least one of the following that:
transmission of the sidelink feedback resource is dropped;
transmission of the sidelink feedback resource is cancelled;
a priority of the sidelink feedback resource is a third priority;
a priority of the sidelink feedback resource is decreased;
a priority of the sidelink feedback resource is a third value;
the sidelink feedback resource has no corresponding priority; and
the sidelink feedback resource is invalid.

In a possible implementation, that the second execution module 502 performs the second operation based on the third status and the fourth status includes:
performing, for the network side device, the second operation in a case that the third status is an eighth sub-status; where
the second operation includes at least one of the following:
   determining to start a first timer and/or determining to enter an inactive time; and
   not transmitting target control information; where
   the eighth sub-status includes: a reporting resource is configured or a reporting resource is scheduled.

In a possible implementation, that the second execution module 502 performs the second operation includes:
performing the second operation at a third time; where
the third time includes one of the following: a second target time, a sum of the second target time and a fifth offset, and a difference between the second target time and a sixth offset.

In a possible implementation, the second target time includes at least one of the following:
a start time or end time of a period of preset sidelink grant;
a time at which negative-acknowledgement feedback information has been received; and
a time corresponding to the preset reporting resource.

In a possible implementation, a reporting resource being configured or a reporting resource being scheduled includes at least one of the following that:
a reporting resource is configured;
a reporting resource is scheduled;
the reporting resource is indicated in sidelink DCI;
presence of the reporting resource is indicated in sidelink DCI;
the reporting resource is included in sidelink SL CG configuration; and
presence of the reporting resource is indicated in sidelink SL CG configuration.

In a possible implementation, the target control information includes: target downlink control information DCI and/or target sidelink control information SCI.

The target DCI includes at least one of the following: sidelink DCI and Uu DCI.

In a possible implementation, the network side device does not need to transmit control signaling and/or data during running of the first timer; and/or the first timer is a hybrid automatic repeat request HARQ RTT timer.

In a possible implementation, the network side device transmits control signaling and/or data during running of the second timer; and/or the second timer is a retransmission timer.

The transmission control apparatus in this embodiment of this application may be an apparatus, or may be a component, an integrated circuit, or a chip in a network side device. The network side device may include but is not limited to an eNB, a gNB, a roadside unit, a terminal with a scheduling or control capability, a header (header) terminal, or the like, which is not specifically limited in the embodiments of this application.

The transmission control apparatus in this embodiment of this application may be an apparatus with an operating system. The operating system may be an Android (Android) operating system, an iOS operating system, or other possible operating systems, and is not specifically limited in the embodiments of this application.

The transmission control apparatus provided in this embodiment of this application can implement the processes implemented in the method embodiment in FIG. 3, with the same technical effects achieved. To avoid repetition, details are not described herein again.

Optionally, as shown in FIG. 6, an embodiment of this application further provides a communication device 600, including a processor 601, a memory 602, and a program or instructions stored in the memory 602 and executable on the processor 601. For example, when the communication device 600 is a terminal and when the program or instructions are executed by the processor 601, the processes of the foregoing embodiment of the transmission control method 200 are implemented, with the same technical effects achieved. When the communication device 600 is a network side device and when the program or instructions are executed by the processor 601, the processes of the foregoing embodiment of the transmission control method 300 are implemented, with the same technical effects achieved. To avoid repetition, details are not described herein again.

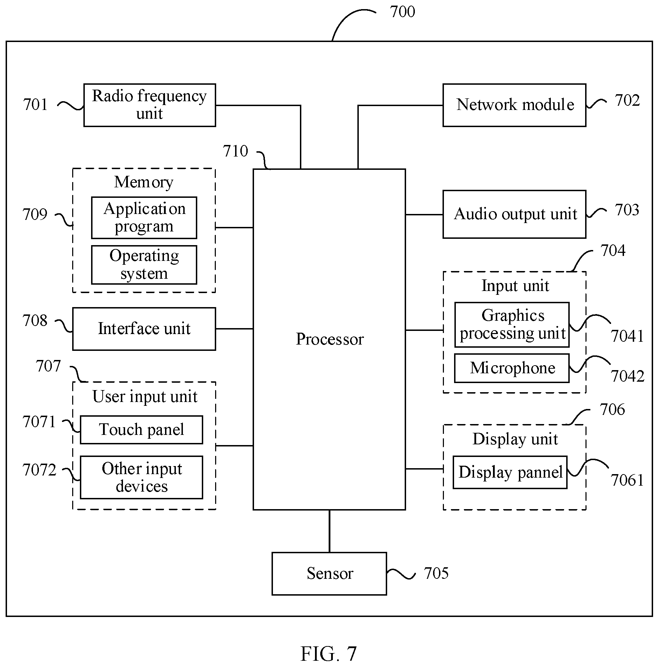

An embodiment of this application further provides a terminal, including a processor and a communication interface, where the processor is configured to perform, based on a first status or based on the first status and a second status, a first operation related to discontinuous reception DRX; where the first status includes: a status of a reporting resource; and the second status includes at least one of the following: a status of a sidelink feedback resource and a feedback enablement status. The communication interface is configured to communicate with an external communication device. For example, the communication interface may include a PCS interface, and sidelink communication may be performed with other terminals through the interface. For another example, the communication interface may include a Uu interface, and communication may be performed with a network side device through the Uu interface. The terminal embodiments correspond to the foregoing terminal-side method embodiments, and the implementation processes and implementations of the foregoing method embodiments can be applied to the terminal embodiments, with the same technical effects achieved. Specifically, FIG. 7 is a schematic diagram of a hardware structure of a terminal for implementing the embodiments of this application.

The terminal 700 includes but is not limited to components such as a radio frequency unit 701, a network module 702, an audio output unit 703, an input unit 704, a sensor 705, a display unit 706, a user input unit 707, an interface unit 708, a memory 709, and a processor 710.

Persons skilled in the art can understand that the terminal 700 may further include a power supply (for example, a battery) supplying power to the components, and the power supply may be logically connected to the processor 710 through a power management system. In this way, functions such as charge management, discharge management, and power consumption management are implemented by using the power management system. The structure of the terminal shown in FIG. 7 does not constitute any limitation on the terminal. The terminal may include more or fewer components than shown in the figure, or a combination of some components, or the components disposed differently. Details are not described herein again.

It can be understood that in this embodiment of this application, the input unit 704 may include a graphics processing unit (Graphics Processing Unit, GPU) 7041 and a microphone 7042. The graphics processing unit 7041 processes image data of a still picture or video obtained by an image capture apparatus (such as a camera) in a video capture mode or an image capture mode. The display unit 706 may include a display panel 7061, and the display panel 7061 may be configured in a form of a liquid crystal display, an organic light-emitting diode, and the like. The user input unit 707 may include a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function key (such as a volume control key or a power on/off key), a trackball, a mouse, a joystick, and the like. Details are not described herein.

In this embodiment of this application, the radio frequency unit 701 receives downlink data from a network side device, and then sends the downlink data to the processor 710 for processing; and also sends uplink data to the network side device. Generally, the radio frequency unit 701 includes but is not limited to an antenna, at least one amplifier, a transceiver, a coupler, a low noise amplifier, a duplexer, and the like.

The memory 709 may be configured to store software programs or instructions and various data. The memory 709 may include a program or instruction storage area and a data storage area. The program or instruction storage area may store an operating system, an application program or instruction required by at least one function (for example, a sound playback function or an image playback function), and the like. In addition, the memory 709 may include a high-speed random access memory, and may further include a non-transitory memory. The non- transitory memory may be a read-only memory (Read-Only memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-transitory solid-state storage device.

The processor 710 may include one or more processing units. Optionally, an application processor and a modem processor may be integrated in the processor 710. The application processor primarily processes an operating system, user interfaces, application programs or instructions, and the like. The modem processor primarily processes radio communication, for example, being a baseband processor. It can be understood that the modem processor may alternatively be not integrated in the processor 710.

The processor 710 is configured to perform a first operation based on a first status or based on the first status and a second status.

The first operation is an operation related to discontinuous reception DRX.

The first status includes: a status of a reporting resource; and
the second status includes at least one of the following: a status of a sidelink feedback resource and a feedback enablement status.

In this embodiment of this application, the terminal performs the first operation based on the first status or based on the first status and the second status, where the first status includes: a status of a reporting resource; and the second status includes at least one of the following: a status of a sidelink feedback resource and a feedback enablement status. In this way, a DRX-related operation can be determined based on the status of the reporting resource, the status of the sidelink feedback resource, or the feedback enablement status, thereby implementing a DRX mechanism in sidelink.

An embodiment of this application further provides a network side device, including a processor and a communication interface, where the processor is configured to perform a second operation based on a third status or based on the third status and a fourth status, where the third status includes: a status of a reporting resource; and the fourth status includes at least one of the following: a status of a sidelink feedback resource and a feedback enablement status; and the communication interface is configured to communicate with an external communication device (for example, the terminal). The network side device embodiments correspond to the embodiments of the foregoing network side device method 300, and the implementation processes and implementations of the foregoing method embodiments can be applied to the network side device embodiments, with the same technical effects achieved.

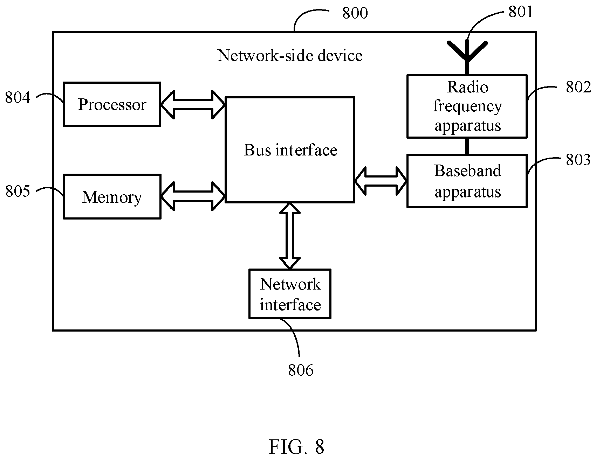

Specifically, an embodiment of this application further provides a network side device. As shown in FIG. 8, the network side device 800 includes an antenna 801, a radio frequency apparatus 802, and a baseband apparatus 803. The antenna 801 is connected to the radio frequency apparatus 802. In an uplink direction, the radio frequency apparatus 802 receives information by using the antenna 801, and sends the received information to the baseband apparatus 803 for processing. In a downlink direction, the baseband apparatus 803 processes to-be-sent information, and sends the information to the radio frequency apparatus 802; and the radio frequency apparatus 802 processes the received information and then sends the information out by using the antenna 801.

The frequency band processing apparatus may be located in the baseband apparatus 803. The method performed by the network side device in the foregoing embodiments may be implemented in the baseband apparatus 803, and the baseband apparatus 803 includes a processor 804 and a memory 805.

The baseband apparatus 803 may include, for example, at least one baseband board, where a plurality of chips are disposed on the baseband board. As shown in FIG. 8, one of the chips, for example, the processor 804, is connected to the memory 805, to invoke a program in the memory 805 to perform the operation of the network device shown in the foregoing method embodiments.

The baseband apparatus 803 may further include a network interface 806, configured to exchange information with the radio frequency apparatus 802, where the interface is, for example, a common public radio interface (common public radio interface, CPRI for short).

Specifically, the network side device in this embodiment of the present invention further includes: instructions or a program stored in the memory 805 and executable on the processor 804. The processor 804 invokes the instructions or program in the memory 805 to execute the method executed by the modules shown in FIG. 5, with the same technical effects achieved. To avoid repetition, details are not repeated herein.

An embodiment of this application further provides a readable storage medium, where a program or instructions are stored in the readable storage medium. When the program or the instructions are executed by a processor, the processes of the foregoing embodiments of the transmission control method 200 or the transmission control method 300 can be implemented, with the same technical effects achieved. To avoid repetition, details are not described herein again.

The processor is a processor in the terminal described in the foregoing embodiments, or a processor in the network side device described in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communications interface. The communications interface is coupled to the processor, and the processor is configured to run a program or instructions to implement the processes of the foregoing embodiments of the transmission control method 200 or the transmission control method 300, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application provides a computer program/program product, where the computer program/program product is stored in a non-transitory storage medium, and when being executed by at least one processor, the program/program product is configured to implement the processes of the foregoing embodiments of the transmission control method 200 or the transmission control method 300, with the same technical effects achieved. To avoid repetition, details are not repeated herein.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary common hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A transmission control method, comprising:
performing, by a terminal based on a first status or based on the first status and a second status, a first operation related to discontinuous reception DRX; wherein
the first status comprises: a status of a reporting resource; and
the second status comprises at least one of following: a status of a sidelink feedback resource and a feedback enablement status.

2. The method according to claim 1, wherein the first status comprises at least one of following that:
no reporting resource is obtained;
a reporting resource meets a first condition;
a reporting resource is configured; and
a reporting resource is scheduled.

3. The method according to claim 1, wherein the status of the sidelink feedback resource comprises at least one of following that:
the sidelink feedback resource is obtained;
a configuration of the sidelink feedback resource is obtained;
no sidelink feedback resource is obtained;
no configuration of the sidelink feedback resource is obtained; and
the sidelink feedback resource meets a second condition.

4. The method according to claim 1, wherein the feedback enablement status comprises at least one of following that: feedback is enabled and feedback is disabled.

5. The method according to claim 1, wherein the performing, by a terminal, a first operation based on the first status and a second status comprises:
performing, by the terminal, the first operation in a case that the first status is a first sub-status and the second status is a second sub-status, wherein the first operation comprises one of following:
a first sub-operation, wherein the first sub-operation comprises at least one of following: starting a first timer and entering an inactive time;
a second sub-operation, wherein the second sub-operation comprises at least one of following: determining that an obtained discontinuous reception DRX configuration does not comprise a first timer, not entering the inactive time, starting a second timer, entering an active time, and stopping the inactive time;
a third sub-operation, wherein the third sub-operation comprises at least one of following: not starting the first timer, not entering the inactive time, starting the second timer, entering the active time, and stopping the inactive time;
a fourth sub-operation, wherein the fourth sub-operation comprises at least one of following: disabling the first timer, not entering the inactive time, starting the second timer, entering the active time, and stopping the inactive time;
a fifth sub-operation, wherein the fifth sub-operation comprises at least one of following: stopping the first timer, not entering the inactive time, starting the second timer, entering the active time, and stopping the inactive time; and
not monitoring target control information; wherein
the first sub-status comprises one of following that:
no reporting resource is obtained; and
a reporting resource meets a first condition; and
the second sub-status comprises at least one of the following that:
a sidelink feedback resource is obtained or a configuration of sidelink feedback resource is obtained; and
feedback is enabled or feedback is disabled.

6. The method according to claim 5, wherein the performing, by a terminal, a first operation comprises:
performing, by the terminal, the first operation at a first time; wherein
the first time comprises one of following: a first target time, a sum of the first target time and a first offset, and a difference between the first target time and a second offset.

7. The method according to claim 1, wherein the performing, by a terminal, a first operation based on the first status and a second status comprises:
performing, by the terminal, the first operation in a case that the first status is a first sub-status and the second status is a third sub-status; wherein
the first operation comprises one of following:
a sixth sub-operation, wherein the sixth sub-operation comprises at least one of following: not starting a first timer, not entering an inactive time, starting a second timer, entering an active time, and stopping the inactive time;
a seventh sub-operation, wherein the seventh sub-operation comprises at least one of following: determining that an obtained discontinuous reception DRX configuration does not comprise a first timer, not entering the inactive time, starting the second timer, entering the active time, and stopping the inactive time;
an eighth sub-operation, wherein the eighth sub-operation comprises at least one of following: disabling the first timer, not entering the inactive time, starting the second timer, entering the active time, and stopping the inactive time;
a ninth sub-operation, wherein the ninth sub-operation comprises at least one of following: stopping the first timer, not entering the inactive time, starting the second timer, entering the active time, and stopping the inactive time; and
a tenth sub-operation, wherein the tenth sub-operation comprises at least one of following: starting the first timer and entering the inactive time; wherein
the first sub-status comprises one of following that: no reporting resource is obtained and a reporting resource meets a first condition; and
the third sub-status comprises at least one of the following that:
no sidelink feedback resource is obtained, no configuration of sidelink feedback resource is obtained, or the sidelink feedback resource meets a second condition; and
feedback is enabled or feedback is disabled.

8. The method according to claim 7, wherein the performing, by a terminal, a first operation comprises:
performing the first operation within a second time; wherein
the second time comprises one of following: a first target time, a sum of the first target time and a third offset, and a difference between the first target time and a fourth offset.

9. The method according to claim 6 or 8, wherein the first target time comprises at least one of following:
a time of a preset sidelink SL downlink control information DCI;
a time of a preset transmission;
a time of the preset sidelink feedback resource;
a start time or end time of a period of preset sidelink grant;
a time at which negative-acknowledgement information is sent or received;
a time at which a transmission failure is determined; and
a time corresponding to a preset reporting resource.

10. The method according to any one of claims 2 and 5 to 8, wherein the reporting resource having met the first condition comprises at least one of following that:
no reporting resource is scheduled;
SL DCI indicates absence of the reporting resource;
the reporting resource is not indicated in SL DCI;
the reporting resource is not comprised in SL configured grant CG configuration;
SL CG configuration indicates absence of the reporting resource;
at least part of resources indicated by SL CG or SL DCI is not used;
transmission of at least part of resources indicated by SL CG or SL DCI is dropped;
transmission of at least part of resources indicated by SL CG or SL DCI is cancelled;
a priority of at least part of resources indicated by SL CG or SL DCI is a first priority;
a priority of at least part of resources indicated by SL CG or SL DCI is decreased;
a priority of at least part of resources indicated by SL CG or SL DCI is a second value;
at least part of resources indicated by SL CG or SL DCI have no corresponding priority;
at least part of resources indicated by SL CG or SL DCI is invalid;
transmission of the reporting resource is canceled;
transmission of the reporting resource is dropped;
a priority of the reporting resource is a second priority;
a priority of the reporting resource is decreased;
a priority of the reporting resource is lower than a first value;
the reporting resource has no corresponding priority; and
the reporting resource is invalid.

11. The method according to any one of claims 3, 7, and 8, wherein the sidelink feedback resource meeting a second condition comprises at least one of following that:
transmission of the sidelink feedback resource is dropped;
transmission of the sidelink feedback resource is cancelled;
a priority of the sidelink feedback resource is a third priority;
a priority of the sidelink feedback resource is decreased;
a priority of the sidelink feedback resource is a third value;
the sidelink feedback resource has no corresponding priority; and
the sidelink feedback resource is invalid.

12. The method according to claim 1, wherein the performing, by a terminal, a first operation based on a first status comprises:
performing, by the terminal, the first operation in a case that the first status is a fourth sub-status; wherein
the first operation comprises at least one of following:
starting a first timer and/or entering an inactive time; and
not monitoring target control information; wherein
the fourth sub-status comprises that: a reporting resource is configured or the reporting resource is scheduled.

13. The method according to claim 12, wherein the performing, by a terminal, a first operation comprises:
performing the first operation at a third time; wherein
the third time comprises one of following: a second target time, a sum of the second target time and a fifth offset, and a difference between the second target time and a sixth offset.

14. The method according to claim 13, wherein the second target time comprises at least one of following:
an end time of a period of preset sidelink grant;
a time at which negative-acknowledgement feedback information is received; and
a time corresponding to the preset reporting resource.

15. The method according to any one of claims 2 and 12 to 14, wherein a reporting resource being configured or a reporting resource being scheduled comprises at least one of following that:
the reporting resource is obtained;
a configuration for the reporting resource is obtained;
the reporting resource is scheduled;
the reporting resource is indicated in SL DCI;
presence of the reporting resource is indicated in SL DCI;
the reporting resource is comprised in SL CG configuration; and
presence of the reporting resource is indicated in SL CG configuration.

16. The method according to claim 5 or 12, wherein the target control information comprises: target downlink control information DCI and/or target sidelink control information SCI; and
the target DCI comprises at least one of following: SL DCI and Uu DCI.

17. The method according to any one of claims 5 to 8 and 12 to 14, wherein the terminal does not need to monitor control signaling and/or data during running of the first timer; and/or
the first timer is a hybrid automatic repeat request HARQ round trip time RTT timer.

18. The method according to any one of claims 5 to 8, wherein
the terminal monitors control signaling and/or data during running of the second timer; and/or
the second timer is a retransmission timer.

19. A transmission control method, comprising:
performing, by a network side device based on a third status or based on the third status and a fourth status, a second operation related to discontinuous reception DRX; wherein
the third status comprises: a status of a reporting resource; and
the fourth status comprises at least one of following: a status of a sidelink feedback resource and a feedback enablement status.

20. The method according to claim 19, wherein the third status comprises at least one of following that:
a reporting resource has not been configured;
a reporting resource meets a first condition;
a reporting resource is configured; and
a reporting resource is scheduled.

21. The method according to claim 19, wherein the status of the sidelink feedback resource comprises at least one of following that:
the sidelink feedback resource is configured;
the sidelink feedback resource is not configured; and
the sidelink feedback resource meets a second condition.

22. The method according to claim 19, wherein the feedback enablement status comprises at least one of following that: feedback is enabled and feedback is disabled.

23. The method according to claim 19, wherein the performing, by a network side device based on the third status and a fourth status, a second operation comprises:
performing, by the network side device, the second operation in a case that the third status is a fifth sub-status and the fourth status is a sixth sub-status, wherein the second operation comprises one of following:
an eleventh sub-operation, wherein the eleventh sub-operation comprises at least one of following: determining to start the first timer and determining to enter the inactive time;
a twelfth sub-operation, wherein the twelfth sub-operation comprises at least one of following: determining that an obtained discontinuous reception DRX configuration does not comprise a first timer, not entering the inactive time, starting a second timer, entering an active time, and stopping the inactive time;
a thirteenth sub-operation, wherein the thirteenth sub-operation comprises at least one of following: determining not to start the first timer, determining not to enter the inactive time, determining to start the second timer, determining to enter the active time, and stopping the inactive time;
a fourteenth sub-operation, wherein the fourteenth sub-operation comprises at least one of following: disabling the first timer, not entering the inactive time, starting the second timer, entering the active time, and stopping the inactive time;
a fifteenth sub-operation, wherein the fifteenth sub-operation comprises at least one of following: determining to stop the first timer, not entering the inactive time, starting the second timer, entering the active time, and stopping the inactive time; and
not transmitting target control information; wherein
the fifth sub-status comprises one of following that:
a reporting resource has not been configured; and
a reporting resource meets a first condition; and
the sixth sub-status comprises at least one of following that:
the sidelink feedback resource is configured; and
feedback is enabled or feedback is disabled.

24. The method according to claim 23, wherein the performing, by a network side device, a second operation comprises:
performing, by the network side device, the second operation at a first time; wherein
the first time comprises one of following: a first target time, a sum of the first target time and a first offset, and a difference between the first target time and a second offset.

25. The method according to claim 19, wherein the performing, by a network side device based on the third status and a fourth status, a second operation comprises:
performing, by the network side device, the second operation in a case that the third status is a fifth sub-status and the fourth status is a seventh sub-status; wherein
the second operation comprises one of following:
a sixteenth sub-operation, wherein the sixteenth sub-operation comprises at least one of following: determining not to start the first timer, determining not to enter the inactive time, determining to start the second timer, determining to enter the active time, and stopping the inactive time;
a seventeenth sub-operation, wherein the seventeenth sub-operation comprises at least one of following: determining that an obtained discontinuous reception DRX configuration does not include a first timer, not entering the inactive time, starting a second timer, entering an active time, and stopping the inactive time;
an eighteenth sub-operation, wherein the eighteenth sub-operation comprises at least one of following: disabling the first timer, not entering the inactive time, starting the second timer, entering the active time, and stopping the inactive time;
a nineteenth sub-operation, wherein the nineteenth sub-operation comprises at least one of following: determining to stop the first timer, not entering the inactive time, starting the second timer, entering the active time, and stopping the inactive time; and
a twentieth sub-operation, wherein the twentieth sub-operation comprises at least one of following: determining to start the first timer and entering the inactive time; wherein
the fifth sub-status comprises one of following that:
a reporting resource has not been configured; and
a reporting resource meets a first condition; and
the seventh sub-status comprises at least one of the following:
no sidelink feedback resource having been configured or the sidelink feedback resource meets a second condition; and
feedback is enabled or feedback is disabled.

26. The method according to claim 25, wherein the performing, by a network side device, a second operation comprises:
performing the second operation at a second time; wherein
the second time comprises one of the following: a first target time, a sum of the first target time and a third offset, and a difference between the first target time and a fourth offset.

27. The method according to claim 24 or 26, wherein the first target time comprises at least one of following:
a time of preset sidelink DCI;
a time of a preset transmission;
a time of the preset sidelink feedback resource;
a start time or end time of a period of preset sidelink grant;
a time at which negative-acknowledgement information has been received;
a time at which a scheduling failure occurs; and
a time corresponding to a preset reporting resource.

28. The method according to any one of claims 20 and 23 to 26, wherein the reporting resource having met the first condition comprises at least one of following that:
no reporting resource is scheduled;
sidelink DCI indicates absence of the reporting resource;
the reporting resource is not indicated in sidelink DCI;
the reporting resource is not comprised in SL CG configuration;
SL CG configuration indicates absence of the reporting resource;
at least part of resources indicated by SL CG or SL DCI is not used;
transmission of at least part of resources indicated by SL CG or SL DCI is dropped;
transmission of at least part of resources indicated by SL CG or SL DCI is cancelled;
a priority of at least part of resources indicated by SL CG or SL DCI is a first priority;
a priority of at least part of resources indicated by SL CG or SL DCI is decreased;
a priority of at least part of resources indicated by SL CG or SL DCI is a second value;
at least part of resources indicated by SL CG or SL DCI have no corresponding priority;
at least part of resources indicated by SL CG or SL DCI is invalid;
transmission of the reporting resource is canceled;
transmission of the reporting resource is dropped;
a priority of the reporting resource is a second priority;
a priority of the reporting resource is decreased;
a priority of the reporting resource is lower than a first value;
the reporting resource has no corresponding priority; and
the reporting resource is invalid.

29. The method according to any one of claims 21, 26, and 27, wherein the sidelink feedback resource meeting a second condition comprises at least one of following that:
transmission of the sidelink feedback resource is dropped;
transmission of the sidelink feedback resource is cancelled;
a priority of the sidelink feedback resource is a third priority;
a priority of the sidelink feedback resource is decreased;
a priority of the sidelink feedback resource is a third value;
the sidelink feedback resource has no corresponding priority; and
the sidelink feedback resource is invalid.

30. The method according to claim 19, wherein the performing, by a network side device based on a third status, a second operation comprises:
performing, by the network side device, the second operation in a case that the third status is an eighth sub-status; wherein
the second operation comprises at least one of following:
determining to start a first timer and/or determining to enter an inactive time; and
not transmitting target control information; wherein
the eighth sub-status comprises: a reporting resource is configured or a reporting resource is scheduled.

31. The method according to claim 30, wherein the performing, by a network side device, a second operation comprises:
performing the second operation at a third time; wherein
the third time comprises one of following: a second target time, a sum of the second target time and a fifth offset, and a difference between the second target time and a sixth offset.

32. The method according to claim 30, wherein the second target time comprises at least one of following:
a start time or end time of a period of preset sidelink grant;
a time at which negative-acknowledgement feedback information has been received; and
a time corresponding to the preset reporting resource.

33. The method according to any one of claims 20 and 30 to 32, wherein a reporting resource being configured or a reporting resource being scheduled comprises at least one of following that:
a reporting resource is configured;
a reporting resource is scheduled;
the reporting resource is indicated in sidelink DCI;
presence of the reporting resource is indicated in sidelink DCI;
the reporting resource is comprised in sidelink SL CG configuration; and
presence of the reporting resource is indicated in sidelink SL CG configuration.

34. The method according to claim 23 or 30, wherein the target control information comprises: target downlink control information DCI and/or target sidelink control information SCI; and
the target DCI comprises at least one of following: sidelink DCI and Uu DCI.

35. The method according to any one of claims 23 to 26 and 30 to 32, wherein
the network side device does not need to transmit control signaling and/or data during running of the first timer; and/or
the first timer is a hybrid automatic repeat request HARQ RTT timer.

36. The method according to any one of claims 23 to 26, wherein
the network side device transmits control signaling and/or data during running of the second timer; and/or
the second timer is a retransmission timer.

37. A transmission control apparatus, comprising:
a first determining module, configured to determine a first status, or the first status and a second status; and
a first execution module, configured to, based on the first status or based on the first status and the second status, perform a first operation related to discontinuous reception DRX; wherein
the first status comprises: a status of a reporting resource; and
the second status comprises at least one of following: a status of a sidelink feedback resource and a feedback enablement status.

38. A transmission control apparatus, comprising:
a second determining module, configured to determine a third status, or the third status and a fourth status; and
a second execution module, configured to, based on the third status or based on the third status and the fourth status, perform a second operation related to discontinuous reception DRX; wherein
the third status comprises: a status of a reporting resource; and
the fourth status comprises at least one of following: a status of a sidelink feedback resource and a feedback enablement status.

39. A terminal, comprising a processor, a memory, and a program or instructions stored in the memory and executable on the processor, wherein when the program or the instructions are executed by the processor, the steps of the transmission control method according to any one of claims 1 to 18 are implemented.

40. A network side device, comprising a processor, a memory, and a program or instructions stored in the memory and executable on the processor, wherein when the program or the instructions are executed by the processor, the steps of the transmission control method according to any one of claims 19 to 36 are implemented.

41. A readable storage medium, wherein the readable storage medium stores a program or instructions, and when the program or instructions are executed by a processor, the steps of the transmission control method according to any one of claims 1 to 18 are implemented, or the steps of the transmission control method according to any one of claims 19 to 36 are implemented.
